# EUROPÄISCHE PATENTSCHRIFT

(11) **EP 1 517 955 B1**
(45) Veröffentlichungstag und Bekanntmachung des Hinweises auf die Patenterteilung: **30.08.2006**
(21) Anmeldenummer: 04712509.1
(22) Anmeldetag: 19.02.2004
(51) Int. Cl.: C08L 33/14, C09D 133/14, C23C 22/03

(54) **CARBOXYLAT-HALTIGE POLYMERE FÜR DIE METALLOBERFLÄCHENBEHANDLUNG**
POLYMERS CONTAINING CARBOXYLATE FOR THE TREATMENT OF METALLIC SURFACES
POLYMERES CONTENANT DU CARBOXYLATE POUR LE TRAITEMENT DE SURFACES METALLIQUES

(30) Priorität: 24.02.2003 DE 10307973; 18.11.2003 DE 10353845
(43) Veröffentlichungstag der Anmeldung: 30.03.2005
(60) Teilanmeldung: 06113446.6
(73) Patentinhaber: BASF Aktiengesellschaft, 67056 Ludwigshafen (DE)
(72) Erfinder: DIETSCHE, Frank, 69198 Schriesheim (DE); WITTELER, Helmut, 67157 Wachenheim (DE); KLÜGLEIN, Matthias, 67071 Ludwigshafen (DE); KLIPPEL, Frank, 67067 Ludwigshafen (DE)
(74) Vertreter: Isenbruck, Günter
(86) Internationale Anmeldenummer: PCT/EP2004/001590
(87) Internationale Veröffentlichungsnummer: WO 2004/074372

(56) Entgegenhaltungen:
- WO-A-96/34995
- WO-A-97/40208
- US-A- 4 536 225

## Beschreibung

Die vorliegende Erfindung betrifft eine Zusammensetzung zur Behandlung von Oberflächen enthaltend ein Carboxylat-haltiges Polymer, eine Passivierungsschicht auf einer Metalloberfläche, die ein Carboxylat-haltiges Polymer enthält, ein Verfahren zur Ausbildung dieser Passivierungsschicht sowie die Verwendung der erfindungsgemäßen Zusammensetzung zur Passivierung einer Metalloberfläche, einen Lackaufbau auf einer Metalloberfläche, umfassend die genannte Passivierungsschicht und eine Lackierung sowie ein Verfahren zur Ausbildung dieses Lackaufbaus.

Metallische Werkstoffe, insbesondere Eisen und Stahl, werden üblicherweise verzinkt, um sie vor korrosiven Umwelteinflüssen zu schützen. Der Korrosionsschutz des Zinks beruht darauf, dass es noch unedler ist als der metallische Werkstoff und deshalb den korrosiven Angriff zunächst ausschließlich auf sich zieht, d.h., es fungiert als Opferschicht. Der metallische Werkstoff selbst bleibt unversehrt, so lange er noch durchgehend mit Zink bedeckt ist und die mechanische Funktionalität bleibt über längere Zeiträume erhalten als bei unverzinkten Teilen. Der korrosive Angriff einer solchen Zinkschicht kann seinerseits durch Aufbringen einer Passivierungsschicht verzögert werden. Dies geschieht insbesondere bei galvanisch verzinkten Teilen, und zwar sowohl bei Teilen, die anschließend lackiert werden als auch bei solchen, die ohne Lackierung zum Einsatz kommen. Auch Aluminiumoberflächen werden, insbesondere wenn sie anschließend lackiert werden sollen, häufig mit einer Passivierungsschicht versehen. Die Passivierungsschicht verzögert den korrosiven Angriff auf die Metalloberfläche und dient gleichzeitig einer Verbesserung der Haftung von gegebenenfalls aufzubringenden Lackschichten. Anstelle des Begriffs Passivierungsschicht wird der Begriff Konversionsschicht häufig synonym verwendet.

Bisher wurden Passivierungsschichten auf Zink- oder Aluminiumoberflächen üblicherweise durch Tauchen des zu schützenden Werkstücks in wässrige saure Lösungen von CrO₃ erhalten. Nach dem Eintauchen und Trocknen ist das Werkstück vor Korrosion geschützt. Beim Eintauchen löst sich ein Teil des zu schützenden Metalls und bildet gleich darauf wieder einen oxidischen Film auf der Metalloberfläche. Dieser Film ähnelt also dem auf vielen Metallen ohnehin vorhandenen Oxidfilm, ist aber dichter und besser haftend als dieser. Unter dem Aspekt der Passivierung ist diese Cr(VI)-Behandlung optimal. Die Zeit bis zur Weißrostbildung eines unlackierten verzinkten Blechs wird durch Cr(VI)-Behandlung von weniger als 1 Stunde auf mehr als 100 Stunden verlängert.

Um die Anwendung der ausgesprochen giftigen und karzinogenen Cr(VI)-Verbindungen zu vermeiden, wird in EP-A 0 907 762 eine Passivierung mit Hilfe von sauren, wässrigen Lösungen von Cr(III)-Salzen vorgeschlagen. Durch die Applikation als sogenannte "Dickschicht" mit einer Dicke von 300 bis 400 µm bieten diese Passivierungsschichten einen hervorragenden Korrosionsschutz.

Zur Vermeidung des Einsatzes von Schwermetallen wie Cr(VI) und ebenfalls Cr(III) gewinnt der Einsatz von Polymeren an Bedeutung.

DE-A 195 16 765 betrifft ein Verfahren zur Erzeugung von Konversionsschichten auf Oberflächen aus Zink oder Aluminium durch Behandlung mit einer sauren Lösung, die einen organischen Filmbildner, Aluminiumionen in Form eines wasserlöslichen Komplexes mit chelatbildenden Carbonsäuren und Phosphorsäure enthält. Als organische Filmbildner sind carboxylgruppenhaltige Polymere, insbesondere Homo- und/oder Copolymerisate von Acryl- und/oder Methacrylsäure genannt. DE-A 195 16 765 enthält jedoch keine Information, welche Copolymerisate eingesetzt werden können. Die Beispiele betreffen lediglich den Einsatz von Homopolymerisaten. Im Gegensatz dazu sind die beschriebenen Copolymere durch Einführung von zusätzlichen Carboxylatfunktionalitäten pro Monomereinheit, insbesondere bei Verwendung von Maleinsäure-Acrylsäure Copolymeren, verbesserte Korrosionseigenschaften erzielbar. Die Kombination mit zusätzlichen Comonomeren ist zur Steuerung der mechanischen und adhäsiven Eigenschaften der Polymere geeignet.
DE-A 197 54 108 betrifft ein wässriges Korrosionsschutzmittel zur Behandlung von Oberflächen aus verzinktem oder legierungsveninktem Stahl sowie auch Aluminium. Das Korrosionsschutzmittel enthält Hexafluoroanionen von Titan(IV) und/oder Zircon(IV), Vanadiumionen, Cobaltionen, Phosphorsäure sowie bevorzugt zusätzlich einen organischen Filmbildner, insbesondere auf Polyacrylat-Basis. Genaue Zusammensetzungen von Copolymeren basierend auf Acrylsäure und/oder Methacrylsäure mit Monomeren, die nicht auf (Meth)acrylsäure basieren, werden in DE-A 197 54 108 nicht erwähnt.

Müller et al., Corrosion Science 42, 577 bis 584 (2000) betrifft amphiphile Copolymere als Korrosionsinhibitoren für Zinkpigmente. Als Copolymere werden Styrol-Maleinsäure-Acrylester-Copolymere eingesetzt. Passivierungsschichten auf Metalloberflächen und deren Herstellung werden nicht offenbart.

GB-A 2 331 942 betrifft Zusammensetzungen zur Behandlung von Metalloberflächen, die zur Korrosionsinhibierung und Verbesserung der Haftung von Beschichtungen auf diesen Oberflächen geeignet sind. Diese Zusammensetzungen enthalten mindestens ein Organosphosphonat oder mindestens eine Organophosphonatspezies. Geeignete Copolymere sind Copolymere aufgebaut aus Phosphonsäure (oder einem Salz oder Ester davon) gemeinsam mit einem zweiten Comonomer. Als zweites Comonomer kann eine ungesättigte Carbonsäure wie Acrylsäure, Maleinsäure oder Methacrylsäure (oder Salze oder Ester der genannten Säuren) eingesetzt werden. Alternativ kann ein Terpolymer aufgebaut aus einer ungesättigten Phosphonatspezies und weiteren geeigneten Comonomeren wie einer ungesättigten Sulfonsäure, einer ungesättigten Carbonsäure oder Acrylamid eingesetzt werden. Ein geeignetes Terpolymer ist aufgebaut aus Vinylphosphonsäure,Vinylsulfonsäure und Acrylsäure.

WO 00/55391 betrifft Zusammensetzungen zur Behandlung von Metalloberflächen, die zur Verbesserung des Widerstandes der Metalloberfläche gegen Korrosion und/oder zur Verbesserung der Haftung von weiteren Beschichtungen auf den behandelten Metalloberflächen eingesetzt werden können. Die Zusammensetzungen enthalten SiO₂ und ein oder mehrere Organophosphonate oder Organophosphonatspezies. Die Zusammensetzungen können ein Copolymer aufgebaut aus Phosphonsäure (oder deren Salz oder Ester) gemeinsam mit einem zweiten Comonomer enthalten. Ein geeignetes zweites Comonomer ist eine ungesättigte Carbonsäure wie Acrylsäure, Maleinsäure oder Methacrylsäure (oder Salze oder Ester der genannten Säuren). Alternativ kann ein Terpolymer eingesetzt werden, aufgebaut aus einer ungesättigten Phosphonatspezies und weiteren geeigneten Comonomeren wie einer ungesättigten Sulfonsäure, einer ungesättigten Carbonsäure oder Acrylamid. Ein geeignetes Terpolymer ist aus Vinylphosphonsäure, Vinylsulfonsäure und Acrylsäure aufgebaut.

Aufgabe der vorliegenden Erfindung ist die Bereitstellung von Zusammensetzungen zur Behandlung von Metalloberflächen, die zur Ausbildung einer Passivierungsschicht auf den Metalloberflächen geeignet sind. Die erhaltene Passivierungsschicht soll sowohl für Werkstücke geeignet sein, die anschließend lackiert werden, als auch für solche, die ohne Lackierung zum Einsatz kommen. Dabei ist bei anschließender Lackierung der mit der Passivierungsschicht versehenen Werkstücke zu beachten, dass eine ausreichende Haftung zur nachfolgenden Lackschicht gewährleistet ist.

Die Aufgabe wird gelöst durch Bereitstellung einer Zusammensetzung zur Behandlung von Metalloberflächen enthaltend
a) mindestens ein Copolymer als Komponente A aufgebaut aus
   aa) 50 bis 99,9 Gew.-% (Meth)acrylsäure oder deren Salzen als Komponente Aa
   ab1) 0,1 bis 50 Gew.-% eines Carboxylat-haltigen Monomeren der Formel (I) 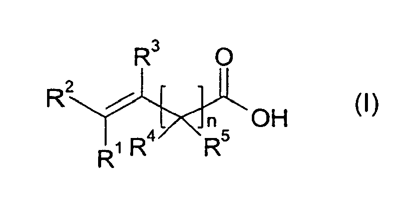 worin die Symbole die folgenden Bedeutungen haben:
      - n: 0 bis 10, bevorzugt 0 bis 5, besonders bevorzugt 0 bis 3
      - R¹, R², R³: unabhängig voneinander Wasserstoff, C₁- bis C₁₈₋Alkyl, das verzweigt oder unverzweigt sein kann, C₃₋bis C₆-Cycloalkyl, C₂- bis C₁₈-Alkenyl, das verzweigt oder unverzweigt sein kann, C₃- bis C₆-Cycloalkenyl, C₆- bis C₁₂-Aryl, das mit Alkyl- oder weiteren Arylsubstituenten substituiert sein kann, wobei die genannten Reste R¹ R² und/oder R³ gegebenenfalls mit mindestens einer Carboxylgruppe substituiert sein können, oder eine Carboxylgruppe; bevorzugt sind R¹, R² und R³ Wasserstoff oder C₁- bis C₁₈-Alkyl, das unverzweigt ist, und gegebenenfalls mit mindestens einer Carboxylgruppe substituiert ist, oder eine Carboxylgruppe; besonders bevorzugt ist einer der Reste R¹ oder R² oder R³ eine Carboxylgruppe und die übrigen Reste sind Wasserstoff oder Methyl; oder R¹, R² und R³ sind Wasserstoff oder Methyl;
      - R⁴ und R⁵: sind unabhängig voneinander, Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆₋Cycloalkenyl, C₆- bis C₁₂-Aryl, das mit Alkyl- oder weiteren Arylsubstituenten substituiert sein kann; bevorzugt sind R⁴ und R⁵, Wasserstoff oder C₁- bis C₁₈-Alkyl, das unverzweigt ist; ganz besonders bevorzugt Wasserstoff oder Methyl;
      oder Salzen, Anhydriden, Estern von Verbindungen der Formel I, ganz besonders bevorzugt sind Maleinsäure, Fumarsäure, Itaconsäure, Crotonsäure oder deren Salze, Ester, Anhydride, wobei (Meth)acrylsäure oder deren Salze ausgenommen sind, als Komponente Ab 1,
      und
   ab2) gegebenenfalls 0,1 bis 50 Gew.-% Phosphor- und/oder Phosphonsäure oder deren Salze enthaltende Gruppen aufweisende Monomere, die mit den unter aa) und ac) genannten Monomeren sowie der Komponente Ab 1 polymerisierbar sind, als Komponente Ab2;
   ac) 0 bis 30 Gew.-% weiteren Comonomeren, die mit den unter aa) und ab) genannten Monomeren polymerisierbar sind, als Komponente Ac;
b) Wasser oder ein anderes Lösungsmittel, das geeignet ist, das Polymer (Komponente A) zu lösen, zu dispergieren, zu suspendieren oder zu emulgieren, als Komponente B;
c) gegebenenfalls weitere oberflächenaktive Additive, Dispergiermittel, Suspendiermittel und/oder Emulgiermittel als Komponente C.

Bei den in den erfindungsgemäßen Zusammensetzungen eingesetzten Copolymeren handelt es sich um vollständig hydrophile Copolymere. Passivierungsschichten, enthaltend die erfindungsgemäß eingesetzten hydrophilen Copolymere weisen einen hervorragenden Korrosionsschutz auf und sind für Nachfolgebehandlungen, zum Beispiel eine Lackierung, sehr gut geeignet.

Als Metalloberfläche ist im Allgemeinen jede beliebige Metalloberfläche einsetzbar. Bevorzugt handelt es sich bei der Metalloberfläche um Aluminium oder AluminiumLegierungen bzw. um Zink oder Zinklegierungen, wobei eine Oberfläche aus Zink oder Zink-Legierungen im Allgemeinen durch einen Verzinkungsvorgang eines metallischen Werkstoffs wie Eisen oder Stahl erhalten wird.

### Komponente A

Bei der Komponente A handelt es sich um ein Copolymer aufgebaut aus
aa) 50 bis 99,9 Gew.-%, bevorzugt 50 bis 90 Gew.-%, besonders bevorzugt 50 bis 75 Gew.-% (Meth)acrylsäure oder deren Salzen als Komponente Aa,
   ab1) 0,1 bis 50 Gew.-%, bevorzugt 2 bis 50 Gew.-%, besonders bevorzugt 5 bis 40 Gew.-% eines Carboxylat-haltigen Monomeren der Formel I 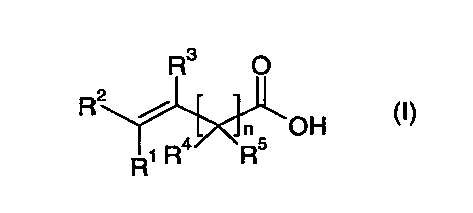 worin die Symbole die folgenden Bedeutungen haben:
      - n: 0 bis 10, bevorzugt 0 bis 5, besonders bevorzugt 0 bis 3;
      - R¹ R², R³: unabhängig voneinander Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆-Cycloalkenyl, C₆- bis C₁₂-Aryl, das mit Alkyl- oder weiteren Arylsubstituenten substituiert sein kann, wobei die genannten Reste R¹, R² und/oder R³ gegebenenfalls mit mindestens einer Carboxylgruppe substituiert sein können, oder eine Carboxylgruppe; bevorzugt sind R¹, R²und R³ Wasserstoff oder C₁- bis C₁₈-Alkyl, das unverzweigt ist, und gegebenenfalls mit mindestens einer Carboxylgruppe substituiert ist, oder eine Carboxylgruppe; besonders bevorzugt ist einer der Reste R¹ oder R² oder R³ eine Carboxylgruppe und die übrigen Reste sind Wasserstoff oder Methyl; oder R¹, R² und R³ sind Wasserstoff oder Methyl;
      - R⁴ und R⁵: sind unabhängig voneinander, Wasserstoff, C₁- bis C₁₈-Alkyl, das verzweigt oder unverzweigt sein kann, C₃- bis C₆-Cycloalkyl, C₂- bis C₁₈-Alkenyl, das verwzeigt oder unverzweigt sein kann, C₃- bis C₆-Cycloalkenyl, C₆- bis C₁₂₋Aryl, das mit Alkyl- oder weiteren Arylsubstituenten substituiert sein kann, bevorzugt sind R⁴ und R⁵, Wasserstoff oder C₁- bis C₁₈-Alkyl, das unverzweigt ist, ganz besonders bevorzugt Wasserstoff oder Methyl;
      oder Salzen, Anhydriden, Estern von Verbindungen der Formel I, ganz besonders bevorzugt sind Maleinsäure, Fumarsäure, Itaconsäure, Crotonsäure oder deren Salze, Ester, Anhydride, wobei (Meth)acrylsäure oder deren Salze ausgenommen sind, als Komponente Ab1;
      und
   ab2) gegebenenfalls 0,1 bis 50 Gew.-%, bevorzugt 1 bis 20 Gew.-%, besonders bevorzugt 2 bis 10 Gew.-% Phosphor- und/oder Phosphonsäure oder deren Salze enthaltende Gruppen aufweisende Monomere, die mit den unter aa) und ac) genannten Monomeren sowie der Komponente Ab1 polymerisierbar sind, als Komponente Ab2;
   ac) . 0 bis 30 Gew.-%, bevorzugt 0 bis 20 Gew.-%, besonders bevorzugt 0 bis 10 Gew.-% weiteren Comonomeren, die mit den unter aa) und ab) genannten Monomeren polymerisierbar sind, als Komponente Ac.

### Komponente Aa

Bei der Komponente Aa handelt es sich um (Meth)acrylsäure oder ein Salz der (Meth)acrylsäure. Es ist auch möglich, Gemische der genannten Komponenten als Komponente Aa einzusetzen.

Geeignete Salze der (Meth)acrylsäure sind insbesondere die Alkali- bzw. Erdalkalisalze, bevorzugt Lithium-, Natrium- oder Kaliumsalze.

Bevorzugt werden als Komponente Aa Acrylsäure und/oder Methacrylsäure eingesetzt.

### Komponente Ab1

Als Komponente Ab1 wird mindestens ein Carboxylat-haltiges Monomer der Formel I 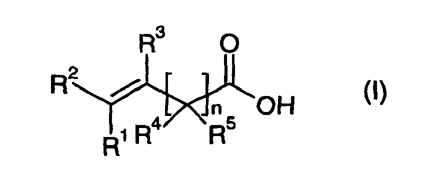 worin die Symbole die folgenden Bedeutungen haben:
- n: 0 bis 10, bevorzugt 0 bis 5, besonders bevorzugt 0 bis 3
- R¹, R², R³: unabhängig voneinander Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆-Cycloalkenyl, C₆- bis C₁₂-Aryl, das mit Alkyl- oder weiteren Arylsubstituenten substituiert sein kann, wobei die genannten Reste R¹, R² und/oder R³ gegebenenfalls mit mindestens einer Carboxylgruppe substituiert sein können, oder eine Carboxylgruppe; bevorzugt sind R¹, R² und R³ Wasserstoff oder C₁- bis C₁₈-Alkyl, das unverzweigt ist, und gegebenenfalls mit mindestens einer Carboxylgruppe substituiert ist, oder eine Carboxylgruppe; besonders bevorzugt ist einer der Reste R¹ oder R² oder R³ eine Carboxylgruppe und die übrigen Reste sind Wasserstoff oder Methyl; oder R¹, R² und R³ sind Wasserstoff oder Methyl;
- R⁴ und R⁵: sind unabhängig voneinander, Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆-Cycloalkenyl, C₆- bis C₁₂₋Aryl, das mit Alkyl- oder weiteren Arylsubstituenten substituiert sein kann; bevorzugt sind R⁴ und R⁵, Wasserstoff oder C₁- bis C₁₈-Alkyl, das unverzweigt ist, ganz besonders bevorzugt Wasserstoff oder Methyl;
oder Salzen, Anhydriden, Estern von Verbindungen der Formel I, ganz besonders bevorzugt sind Maleinsäure, Fumarsäure, Itaconsäure, Crotonsäure oder deren Salze, Ester, Anhydride, wobei (Meth)acrylsäure oder deren Salze ausgenommen sind.

Bevorzugt ist die Komponente Ab1 ausgewählt aus mindestens einer Verbindung ausgewählt aus der Gruppe bestehend aus Crotonsäure, Maleinsäure, Fumarsäure, Itaconsäure, Salzen, Estern und Anhydriden der genannten Säuren.

Geeignete Salze der vorstehend genannten Säuren sind insbesondere die Alkali- und Erdalkalimetall-Salze. Geeignete Ester sind die Umsetzungsprodukte der genannten Säuren mit C₁- bis C₂₀-Alkoholen, bevorzugt mit C₁- bis C₁₆ -Alkoholen, besonders bevorzugt mit C₁ bis C₁₀-Alkoholen.

Bevorzugt werden Maleinsäure, Salze oder Ester der Maleinsäure oder Maleinsäureanhydrid eingesetzt. Bevorzugt eingesetzte Salze und Ester sind bereits vorstehend genannt.

Ganz besonders bevorzugt wird als Komponente Ab1 Maleinsäureanhydrid eingesetzt.

### Komponente Ab 2

Zusätzlich zu der Komponente Ab1 kann das Copolymer (Komponente A) aus Phosphor-und/oder Phosphonsäure oder deren Salze enthaltende Gruppen aufweisenden Monomeren, die mit den unter aa) und ac) genannten Monomeren sowie der Komponente Ab1 polymerisierbar sind, aufgebaut sein.

Geeignete Monomere sind bevorzugt Monomere der allgemeinen Formeln 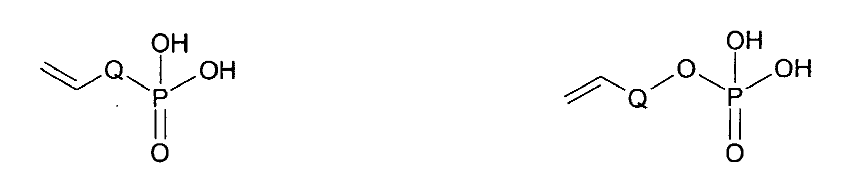 worin Q die folgenden Bedeutungen aufweisen kann:
eine Einfachbindung,
eine Alkylengruppe mit 1 bis 6 Kohlenstoffatomen in einer Kette, wobei ein oder mehrere, bevorzugt 1 oder 2, Kohlenstoffatome der Alkylengruppe mit Alkylgruppen, bevorzugt Methyl, O-haltigen Gruppen, bevorzugt -OH, Phosphorsäuregruppen und/oder =O substituiert sein können und/oder ein oder mehrere, bevorzugt 1 oder 2, nicht benachbarte Kohlenstoffatome durch -O- ersetzt sein können.

Besonders bevorzugt sind geeignete Phosphor- und/oder Phosphonsäure oder deren Salze enthaltene Gruppen aufweisende Monomere, die mit den unter aa) und ac) genannten Monomeren sowie der Komponente Ab1 polymerisierbar sind, ausgewählt aus der Gruppe bestehend aus 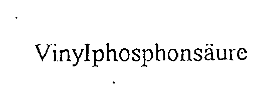 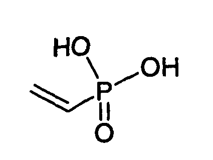 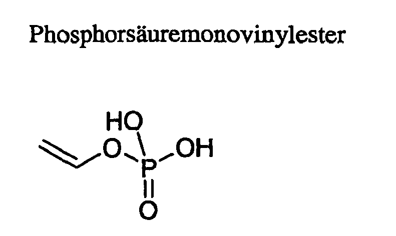 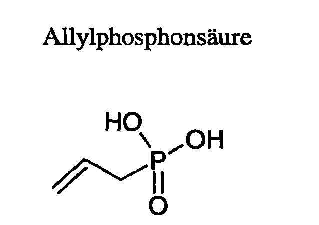 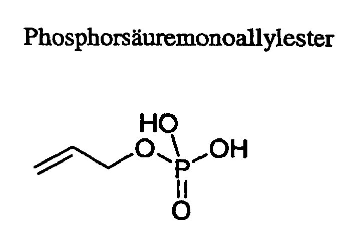 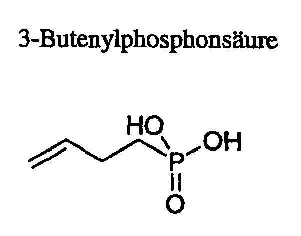 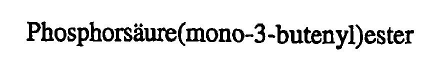 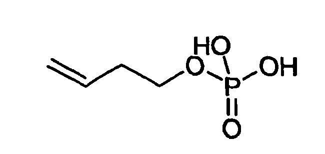 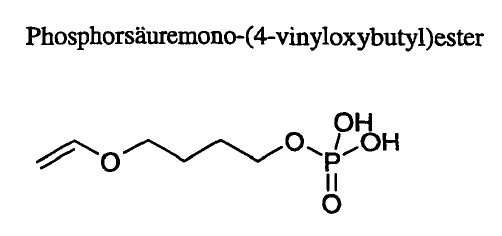 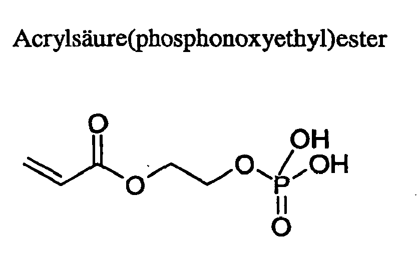 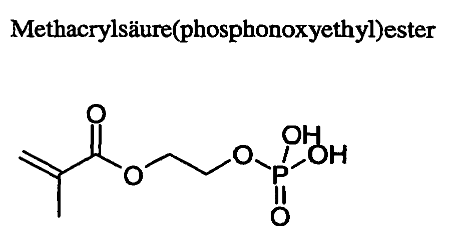 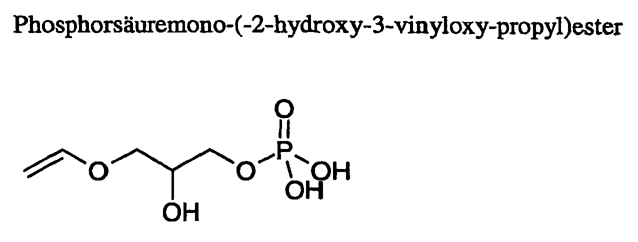 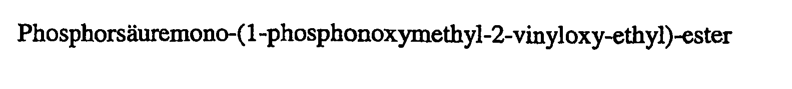 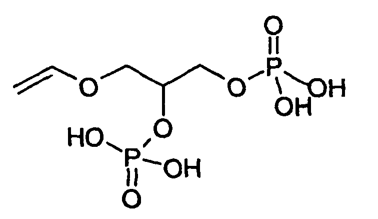 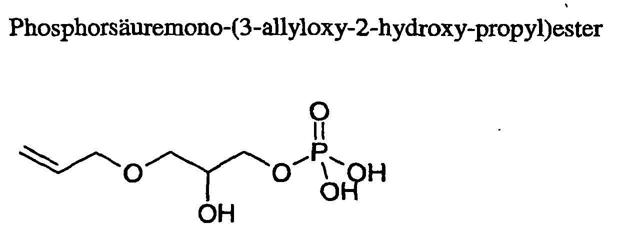 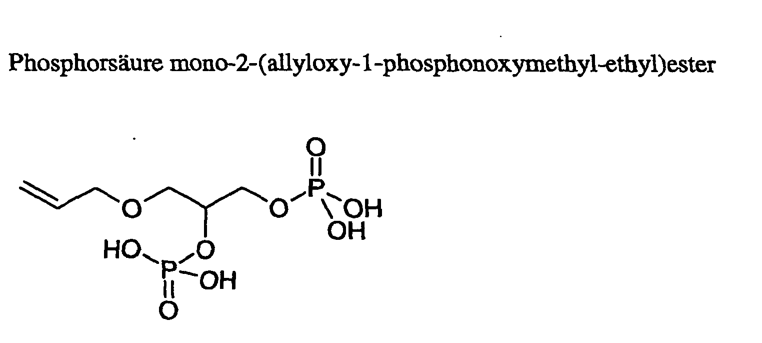 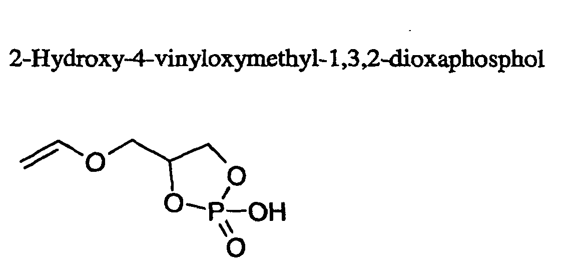 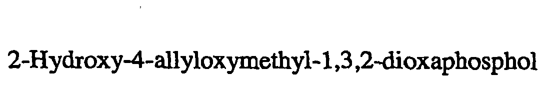 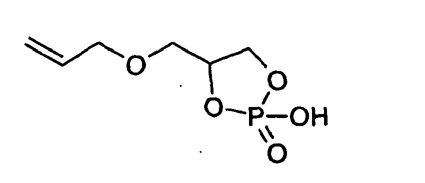 und

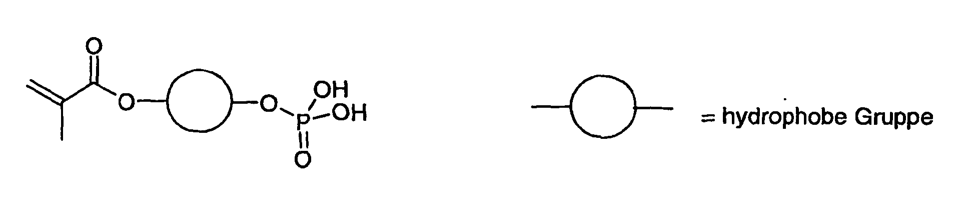

Des Weiteren können die Salze der vorstehend genannten Monomere eingesetzt werden. Geeignete Salze sind insbesondere die Alkali- bzw. Erdalkalisalze, bevorzugt Lithium-, Natrium- oder Kaliumsalze.

Besonders bevorzugt sind Vinylphosphonsäure und Methacrylsäure(phosphonoxyethyl)ester.

Unter einer hydrophoben Gruppe ist eine beliebige, dem Fachmann bekannte, hydrophobe Gruppe zu verstehen. Bevorzugt ist die hydrophobe Gruppe eine Alkylengruppe -(CR^{a}R^{b})ₙ₋, worin n = 1 bis 10 ist und R^{a} und R^{b} unabhängig voneinander Wasserstoff, C₁- bis C₆₋Alkyl oder Aryl, das gegebenenfalls substituiert sein kann, zum Beispiel Phenyl, bedeuten. In einer weiteren bevorzugten Ausführungsfomr ist die hydrophobe Gruppe aus Alkylenoxid-Einheiten, bevorzugt Ethylenoxid-, Propylenoxid- und/oder Butylenoxid-Einheiten, besonders bevorzugt Ethylenoxid- und/oder Propylenoxid-Einheiten aufgebaut. Bevorzugt ist die hydrophobe Gruppe aus 3 bis 10 der vorstehend genannten Alkylenoxid-Einheiten aufgebaut. Des Weiteren kann es sich bei der hydrophoben Gruppe um eine Polytetrahydrofurangruppe handeln. Es ist ebenfalls möglich, dass die hydrophobe Gruppe aus mehreren verschiedenen der vorstehend genannten Gruppen, also aus Alkylengruppen und/oder Alkylenoxid-Einheiten und/oder Polytetrahydrofuran-Gruppen aufgebaut ist. Ganz besonders bevorzugt ist die hydrophobe Gruppe aus einer Alkyleneinheit der Formel -(CH₂)ₙ-, mit n = 1-10, 2 bis 10 Ethylenoxid-Einheiten oder 2-10 Propylenoxid-Einheiten aufgebaut.

Die Copolymere (Komponente A) können somit neben Monomeren der Komponente Aa sowohl aus Monomeren der Komponente Ab1 als auch aus Monomeren der Komponente Ab2 aufgebaut sein. Es ist ebenfalls möglich, dass die Copolymere (Komponente A) neben Monomeren der Komponente Aa aus Monomeren der Komponente Ab1 aufgebaut sind. In jedem Fall können die Copolymere (Komponente A) zusätzlich gegebenenfalls aus Comonomeren der Komponente Ac aufgebaut sein.

### Komponente Ac

Als Komponente Ac sind alle Comonomere geeignet, die mit den unter aa) und ab) genannten Monomeren polymerisierbar sind. Solche Monomere sind bevorzugt ethylenisch ungesättigte Monomere.

Als wenigstens eine ethylenisch ungesättigte Gruppe aufweisende Monomere kommen z.B. in Betracht: Olefine wie Ethylen oder Propylen, vinylaromatische Monomere wie Styrol, Divinylbenzol, 2-Vinylnaphthalin und 9-Vinylanthracen, substituierte vinylaromatische Monomere wie p-Methylstyrol, α-Methylstyrol, o-Chlorstyrol, p-Chlorstyrol, 2,4-Dimethylstyrol, 4-Vinylbiphenyl und Vinyltoluol, Ester aus Vinylalkohol und 1 bis 18 C-Atome aufweisenden Monocarbonsäuren wie Vinylacetat, Vinylpropionat, Vinyl-nbutyrat, Vinyllaurat und Vinylstearat, Anhydride oder Ester aus 3 bis 6 C-Atome aufweisenden α,β-monoethylenisch ungesättigten Mono- und Dicarbonsäuren (mit Ausnahme der als Komponente Ab genannten Verbindungen), wie insbesondere Acrylsäure und Methacrylsäure, mit im allgemeinen 1 bis 20, bevorzugt 1 bis 12, besonders bevorzugt 1 bis 8 und ganz besonders bevorzugt 1 bis 4 C-Atome aufweisenden Alkanolen wie insbesondere Acrylsäure- und Methacrylsäure-, Methyl-, Ethyl-, -n-Butyl-, iso-Butyl-, tert.-Butyl- und -2-Ethylhexylester, Maleinsäuredimethylester oder Maleinsäure-n-butylester, oder die Ester der genannten Carbonsäuren mit Alkoxyverbindungen, beispielsweise Ethylenoxid oder Polyethylenoxid, wie Ethylenoxidacrylat oder -methacrylat, die Nitrile der vorgenannten a,β-monoethylenisch ungesättigten Carbonsäuren wie Acrylnitril und Methacrylnitril sowie C₄₋₈-konjugierte Diene wie 1,3-Butadien und Isopren und N-Vinylverbindungen, wie beispielsweise N-Vinylpyrrolidon und N-Vinylformamid; Vinylether, H₂C=CH-OR⁵, worin R⁵ ein C₁ - bis C₁₈-Akylrest ist, der verzweigt oder unverzweigt sein kann, sowie geeignete Monomere, die Sulfon- oder Sulfatgruppen enthalten.

Als Styrolverbindungen kommen solche der allgemeinen Formel II in Betracht: 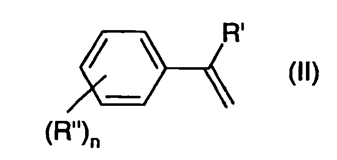 in der R' und R" unabhängig voneinander für H oder C₁- bis C₈-Alkyl und n für 0, 1, 2 oder 3 stehen.

Besonders bevorzugt werden in dem erfindungsgemäßen Verfahren die Monomere Styrol, α-Methylstyrol, Divinylbenzol, Vinyltoluol, N-Vinylpyrrolidon und N-Vinylformamid, C₁- bis C₂₀-Alkyl-acrylate und C₁- bis C₂₀-Alkyl-methacrylate, insbesondere n-Butylacrylat, 2-Ethylhexylacrylat oder Methylmethacrylat und Butadien, außerdem Acrylnitril, Glycidester und (Poly)alkoxylate der Acryl- und Methacrylsäure, sowie Monomerengemische, die zu wenigstens 85 Gew.% aus den vorgenannten Monomeren oder Gemischen der vorgenannten Monomere zusammengesetzt sind, eingesetzt.

Ganz besonders bevorzugt ist die Komponente A ein Copolymer aufgebaut aus Acrylsäure und Maleinsäureanhydrid. Dabei beträgt der Anteil an Acrylsäure bevorzugt 50 bis 99 Gew.-%, besonders bevorzugt 50 bis 80 Gew.-% und der Anteil an Maleinsäureanhydrid 1 bis 50 Gew.-%, besonders bevorzugt 15 bis 40 Gew.-%. In einer weiteren bevorzugten Ausführungsform ist die Komponente A ein Terpolymer aufgebaut aus (Meth)acrylsäure, Maleinsäureanhydrid und Vinylphosphonsäure. Bevorzugt ist das Terpolymer aus 20 bis 80 Gew.-% (Meth)acrylsäure, 10 bis 40 Gew.-% Maleinsäureanhydrid und 0,1 bis 30 Gew.-%, bevorzugt 0,1 bis 20 Gew.-% Vinylphosphonsäure aufgebaut.

Die als Komponente A eingesetzten Polymere können auf alle dem Fachmann bekannten Verfahrensweisen hergestellt werden. Bevorzugt werden die Copolymere durch freie radikalische Copolymerisation .der genannten Komponenten Aa, Ab1 und gegebenenfalls Ab2 und gegebenenfalls Ac hergestellt. Die Mengenverhältnisse der eingesetzten Komponenten sind bereits vorstehend genannt. Die freie radikalische Copolymerisation kann beispielsweise in Lösung, Emulsion, Dispersion, Suspension oder Substanz erfolgen.

Geeignete Polymerisationsverfahren zur Herstellung der als Komponente A eingesetzten Polymere sind beispielsweise in DE-A 196 06 394 aufgeführt.

Besonders bevorzugt werden die Copolymere (A) durch freie radikalische Copolymerisation in Lösung hergestellt. Bevorzugt ist das Lösungsmittel ausgewählt aus der Gruppe bestehend aus Wasser, Alkoholen, Ethern und Ketonen, bevorzugt Wasser.

Werden Anhydrid-Copolymere erhalten, so werden diese bevorzugt durch Zugabe geeigneter Mengen entsalzten Wassers und mindestens einer stickstoffhaltigen Base hydrolysiert. Bevorzugt werden als stickstoffhaltige Basen tertiäre alkalische Amine eingesetzt, besonders bevorzugt Hydroxylamine wie Mono-, Di-, Triethanolamin, 3-Dimethylaminopropylamin und Imidazol.

Die Polymerisationsbedingungen sind dem Fachmann bekannt.

Die Carboxylat-haltigen Copolymere (Komponente A) können in einer weiteren Ausführungsform durch polymeranaloge Umsetzungen erhalten werden. Geeignete polymeranaloge Umsetzungen sind dem Fachmann bekannt. Beispielsweise ist die Herstellung der Carboxylat-haltigen Copolymere durch entsprechende Funktionalisierung von durch Copolymerisation hergestellten Copolymeren; durch Umsetzung von mehrwertigen Alkoholen mit höherwertigen Carbonsäuren und gegebenenfalls Phosphorsäuregruppen-hatligen Verbindungen möglich Unter Copolymeren sollen im Allgemeinen solche Verbindungen verstanden werden, die mindestens 3 Wiederholungseinheiten, bevorzugt mehr als 10 Wiederholungseinheiten aufweisen. Das Gewichtsmittel des Molekulargewichts (Mw) der erfindungsgemäß eingesetzten Copolymere beträgt im Allgemeinen 500 bis 5 000 000 g/mol, bevorzugt 1000 bis 1,5 Millionen g/mol. Das Polymer kann auch gering anvemetzt sein, so dass sich kein Molekulargewicht angeben lässt, obwohl das Polymer in technisch üblichen Lösungsmitteln dispergiert, emulgiert, oder suspendiert werden kann. Das Molekulargewicht (Mw) wurde mittels Gelpermeationschromatographie mit Polystyrol-Standard ermittelt.

### Bei den erfindungsgemäß als Komponente A eingesetzten Copolymeren handelt es sich um hydrophile Copolymere. Passivierungsschichten enthaltend diese hydrophilen Copolymere sind hervorragend für eine nachfolgende Lackierung geeignet.

### Komponente B

Die Komponente B ist Wasser oder ein anderes Lösungsmittel, das geeignet ist, das Copolymer (Komponente A) zu lösen oder zu dispergieren, zu suspendieren oder zu emulgieren. Unter einem Lösungsmittel wird im Rahmen des vorliegenden Textes eine flüssige Matrix verstanden, in welcher die verschiedenen Inhaltsstoffe der erfindungsgemäßen Zusammensetzung möglichst fein verteilt vorliegen. Eine derartig feine Verteilung kann beispielsweise im Sinne einer molekulardispersen Verteilung eine echte Lösung der Inhaltsstoffe im Lösungsmittel sein. Der Begriff "Lösungsmittel" umfasst jedoch auch flüssige Matrizen, in denen die Inhaltsstoffe im Sinne einer Emulsion oder Dispersion verteilt sind, d.h. keine molekulardisperse Lösung bilden.

Als Lösungsmittel eignen sich beispielsweise Wasser sowie wassermischbare und nicht mit Wasser mischbare Lösemittel. Geeignete wassermischbare Lösungsmittel sind beispielsweise primäre oder sekundäre Mono- oder Polyalkohole mit 1 bis etwa 6 C-Atomen wie Methanol, Ethanol, Propanol, Isopropanol, n-Butanol, Iso-Butanol, Pentanol, Hexanol, Cyclohexanol oder Glyzerin. Ebenfalls als wassermischbare Lösemittel geeignet sind niedermolekulare Ketone wie Aceton oder Methyl-Ethyl-Keton oder Etheralkohole wie Diethylenglykol oder Triethylglykol. Ebenfalls im Rahmen der vorliegenden Erfindung geeignet sind Lösungsmittel, die nicht oder nur in geringem Maße mit Wasser mischbar sind. Hierzu zählen beispielsweise Ether wie Diethylether, Dioxan oder Tetrahydrofuran, aromatische Lösemittel wie Toluol oder Xylol, halogenierte Lösemittel wie Dichlormethan, Chloroform oder Tetrachlormethan sowie gegebenenfalls substituierte aliphatische Lösemittel worunter beispielsweise die höheren Homologen der oben genannten Alkohole und Ketone sowie Paraffinkohlenwasserstoffe fallen.

Die oben genannten Lösungsmittel können einzeln oder als Gemisch aus zwei oder mehr der genannten Lösungsmittel eingesetzt werden. Im Rahmen einer bevorzugten Ausführungsform der vorliegenden Erfindung wird als Lösungsmittel Wasser, gegebenenfalls im Gemisch mit einem oder mehreren der oben genannten, vorzugsweise wasserlöslichen Lösungsmittel, eingesetzt. Wenn im Rahmen der vorliegenden Erfindung ein Lösungsmittel eingesetzt werden soll, das Wasser und ein nicht mit Wasser mischbares Lösungsmittel enthält, so kann das Lösungsmittel beispielsweise einen Emulgator enthalten um eine im wesentlichen stabile W/O- oder eine O/W-Emulsion zu ermöglichen.

Wenn die erfindungsgemäße Zusammensetzung ein Gemisch aus Wasser und einem weiteren, wassermischbaren Lösungsmittel enthält, so beträgt der Anteil an Wasser an einem solchen Gemisch vorzugsweise mindestens etwa 30 Gew.-% oder mehr, beispielsweise mindestens etwa 40 oder mindestens etwa 50 Gew.-%. Im Rahmen einer besonders bevorzugten Ausführungsform der vorliegenden Erfindung beträgt der Wasseranteil mindestens etwa 75 Gew.-%. Geeignete Kombinationen von Wasser und wassermischbaren Lösungsmitteln sind beispielsweise Wasser/Methanol, Wasser/Ethanol, Wasser/Propanol oder Wasser/Isopropanol. Bevorzugt ist im Rahmen der vorliegenden Erfindung ein Gemisch aus Wasser und Ethanol, wobei der Wasseranteil vorzugsweise größer als etwa 75 Gew.-%, beispielsweise größer als etwa 80 oder etwa 85 Gew.-%, ist.

Im Rahmen einer bevorzugten Ausführungsform der vorliegenden Erfindung enthält eine erfindungsgemäße Zusammensetzung mindestens ein Lösungsmittel, das einen Wasseranteil von mindestens etwa 50 Gew.-% aufweist.

Besonders bevorzugt wird ausschließlich Wasser als Lösungsmittel eingesetzt.

Die bevorzugt als wässrige Lösung erfindungsgemäß eingesetzte Zusammensetzung weist im Allgemeinen einen pH-Wert von 1 bis 6 auf, wobei je nach Substrat und Applikationsart sowie Einwirkungsdauer der erfindungsgemäß eingesetzten Zusammensetzung auf die Oberfläche des Grundmetalls engere pH-Bereiche gewählt sein können. Beispielsweise stellt man den pH-Wert zur Behandlung blanker Metalloberflächen vorzugsweise auf den Bereich von 2 bis 6 ein, bei Behandlung von Aluminiumoberflächen vorzugsweise auf den Bereich von 2 bis 4 und bei Behandlung von Stahl, Zink oder verzinktem Stahl vorzugsweise auf den Bereich von 3 bis 5 ein. Bereits vorbehandelte Oberflächen eines Grundmetalls, die beispielsweise eine Phosphatschicht tragen, werden bevorzugt mit einer erfindungsgemäß eingesetzten Zusammensetzung mit einem pH-Wert von 3,5 bis 5 in Kontakt gebracht.

Die Menge an Wasser oder einem anderen Lösungsmittel ist abhängig davon, ob die erfindungsgemäße Zusammensetzung eine einsatzfertige Zusammensetzung oder ein Konzentrat ist, sowie vom jeweiligen Einsatzzweck. Grundsätzlich ergibt sich die Menge aus den für die einsatzfertige Zusammensetzung angegebenen Konzentrationen der einzelnen Komponenten.

### Komponente C

Gegebenenfalls kann die erfindungsgemäße Zusammensetzung zusätzlich oberflächenaktive Verbindungen, Emulgiermittel und/oder Dispergiermittel enthalten. Geeignete oberflächenaktive Verbindungen sind Tenside, die kationisch, anionisch, zwitterionisch oder nichtionisch sein können. Geeignete Tenside sind beispielsweise Alkyl- und Alkenylalkoxylate vom Typ R-EOₙ/POₘ wobei R im allgemeinen lineare oder verzweigte C₆-C₃₀-Alkylreste, bevorzugt C₈-C₂₀- Alkylreste sind und EO für eine Ethylenoxid-Einheit und PO für eine Propylenoxid-Einheit steht, wobei EO und PO in beliebiger Reihenfolge angeordnet sein können und n und m unabhängig voneinander > 1 und < 100 sind, bevorzugt >3 und <50, z.B. Emulan®, Lutensol® und Plurafac® (der BASF), Alkylphenolethoxylate, EO/PO-Blockcopolymere (Pluronic®, der BASF), Alkylethersulfate und Alkyammoniumsalze, sog. Quats.

### Die Menge dieser Komponenten in der erfindungsgemäßen Zusammensetzung beträgt im Allgemeinen 0,01-100 g/l, bevorzugt 0,1 bis 20 g/l.

Bevorzugt enthält die erfindungsgemäße Zusammensetzung zusätzlich zu den Komponenten A, B, und gegebenenfalls C

### d) mindestens eine stickstoffhaltige Base als Komponente D.

Bevorzugt werden als stickstoffhaltige Basen tertiäre alkalische Amine eingesetzt, besonders bevorzugt Hydroxylamine wie Mono-, Di-, Triethanolamin, 3-Dimethylaminopropylamin und Imidazol.

Die Base kann zur Hydrolyse der Copolymere (Komponente A), insbesondere der Copolymere auf Basis von (Meth)acrylsäure und Maleinsäureanhydrid und gegebenenfalls Vinylphosphonsäure oder gegebenenfalls Methacrylsäure-(phosphonoxyethyl)ester eingesetzt werden. Die Hydrolyse der Copolymere erfolgt jedoch bevorzugt durch Zugabe von Wasser.

Es ist ebenfalls möglich, eine Hydrolyse der Copolymere mit geeigneten Mengen Wasser und einer stickstoffhaltigen Base (Komponente D) direkt im Anschluss an die Herstellung der Copolymere durchzuführen. In einem solchen Fall ist eine nachträgliche Zugabe einer stickstoffhaltigen Base zu der erfindungsgemäßen Zusammensetzung enthaltend die Komponenten A, B und gegebenenfalls C nicht mehr erforderlich.

In einer bevorzugten Ausführungsform wird die erfindungsgemäße Zusammensetzung zur Behandlung von Metalloberflächen eingesetzt und enthält zusätzlich zu den Komponenten A, B, gegebenenfalls C und gegebenenfalls D.
e) mindestens ein Salz, eine Säure oder eine Base basierend auf Übergangsmetallkationen, Übergangsmetalloxoanionen, Fluorometallaten oder Lantanoiden als Komponente E, und/oder
f) mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren, Ameisensäure, Essigsäure, Salpetersäure, Flußsäure und Salzsäure als Komponente F
   und/oder
g) mindestens einen weiteren Korrosionsinhibitor als Komponente G,
   und/oder
h) Verbindungen des Ce, Ni, Co, V, Fe, Zn, Zr, Ca, Mn, Mo, W, Cr und/oder Bi als Komponente H,
   und/oder
i) weitere Hilfs- und Zusatzstoffe als Komponente I,
   und/oder
j) mindestens einen Komplexbildner als Komponente J,
   und/oder
k) weitere Additive als Komponente K.

Diese Zusammensetzungen sind hervorragend zum Passivieren, insbesondere zum Passivierung der in der vorliegenden Anmeldung genannten Metalloberflächen geeignet.

### Komponente E

Als Komponente E sind Salze, Säuren und Basen basierend auf Übergangsmetallkationen, Übergangsmetalloxoanionen, Fluorometallaten oder Lanthanoiden geeignet. Geeignete Übergangsmetallkationen sind insbesondere Fluorometallate des Ti (IV), Zr (IV), Hf (IV) und/oder des Si (IV), geeignete Lanthanoide insbesondere Ce. Des Weiteren sind Wolframate und Molybdate geeignet.

Zusammensetzungen gemäß der vorliegenden Anmeldung, enthaltend die Komponente E sind insbesondere dazu geeignet, entweder eine korrosionsschützende Schicht auf einer Metalloberfläche abzuscheiden oder die korrosionsschützende Wirkung einer bereits auf der Metalloberfläche abgeschiedenen Korrosionsschicht zu verstärken. Die erfindungsgemäß eingesetzten Polymere (Komponente A) weisen in den erfindungsgemäßen Zusammensetzungen eine hervorragende Korrosionsschutzwirkung auf. Eine Zugabe der Komponente E ist jedoch nicht erforderlich, um eine hervorragende Korrosionsschutzwirkung der erfindungsgemäßen Zusammensetzungen zu erzielen. In einer Ausführungsform sind die erfindungsgemäßen Zusammensetzungen daher frei von Verbindungen gemäß Komponente E.

Die Menge der Komponente E beträgt - falls die Komponente E in den erfindungsgemäßen Zusammensetzungen enthalten ist - bevorzugt 0,02 bis 20 g/l.

### Komponente F

Die erfindungsgemäßen Zusammensetzungen können neben oder anstelle der Komponente E des weiteren mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren wie Methansulfonsäure, Vinylsulfonsäure, Allylsulfonsäure, m-Nitrobenzolsulfonsäure, Naphthalinsulfonsäure und Derivaten davon, Ameisensäure, Essigsäure, Salpetersäure, Flußsäure und Salzsäure enthalten. Die Art der eingesetzten Säure ist dabei abhängig von der Art der Behandlung der Metalloberfläche. So wird Phosphorsäure im Allgemeinen in Phosphatierungsbädern zur Phosphatierung von Stahl-Oberflächen eingesetzt. Die erfindungsgemäße Zusammensetzung ist in diesem Falle eine Phosphatierlösung. Dabei unterscheidet man zwischen sogenannten "nicht schichtbildenden" Phosphatierlösungen, das sind Lösungen, die keine zweiwertigen Metalle aufweisen. Solche "nicht schichtbildenden" Phosphatierlösungen liegen beispielsweise in Form einer Eisenphosphatierlösung vor. Enthalten die Phosphatierlösungen Ionen zweiwertiger Metalle, z. B. Zink und/oder Mangan, liegen die Phosphatierlösungen als sogenannte "schicht bildende" Phosphatierlösungen vor. Salpetersäure enthaltende Zusammensetzungen gemäß der vorliegenden Anmeldung sind insbesondere zur Oberflächenbehandlung von Zink und seinen Legierungen geeignet, während Flußsäure enthaltende Zusammensetzungen insbesondere zur Oberflächenbehandlung von Aluminium und seinen Legierungen geeignet sind.

Die Menge an eingesetzter Säure kann je nach Anwendungsgebiet variieren. Im allgemeinen werden - falls die Komponente F in den erfindungsgemäßen Zusammensetzungen enthalten ist - 0,2 bis 700 g/l, bevorzugt 0,2 bis 500 g/l, besonders bevorzugt 2 bis 200 g/l, ganz besonders bevorzugt 5 bis 150 g/l der Komponente F eingesetzt.

### Komponente G

Die erfindungsgemäßen Zusammensetzungen können neben oder anstelle der Komponenten E und/oder F mindestens einen weiteren Korrosionsinhibitor enthalten. Geeignete Korrosionsinhibitoren sind ausgewählt aus der Gruppe bestehend aus Butindiol, Benztriazol, Aldehyden, Amincarboxylaten, Amino- und Nitrophenolen, Aminoalkoholen, Aminobenzimidazol, Aminoimidazolinen, Aminotriazol, Benzimidazolaminen, Benzothiazolen, Derivaten des Benztriazols, Borsäureestern mit verschiedenen Alkanolaminen wie beispielsweise Borsäurediethanolaminester, Carbonsäuren und ihren Estern, Chinolinderivaten, Dibenzylsulfoxid, Dicarbonsäuren und ihren Estern, Diisobutenylbernsteinsäure, Dithiophosphonsäure, Fettaminen und Fettsäureamiden, Guanidinderivaten, Harnstoff und seinen Derivaten, Laurylpyridiniumchlorid, Maleinsäureamiden, Mercaptobenzimidazol, N-2-Ethylhexyl-3-aminosulfopropionsäure, Phosphoniumsalzen, Phthalsäureamiden, Amin- und Natrium- neutralisierten Phosphorsäureestern von Alkylalkoholen sowie diesen Phosphorsäureestern selbst, Phosphorsäureestern von Polyalkoxylaten und hier insbesondere von Polyethylenglykol, Polyetheraminen, Sulfoniumsalzen, Sulfonsäuren wie beispielsweise Methansulfonsäure, Thioethern, Thioharnstoffen, Thiuramidsulfiden, Zimtsäure und ihren Derivaten, Zinkphosphaten und -silikaten, Zirkonphosphaten und -silikaten und Alkindiolalkoxylaten, insbesondere Butindiolethoxylat, Butindiolpropoxylat, Propargylalkoholethoxylat und Propargylalkoholpropoxylat.

Bevorzugt werden als weitere Korrosionsinhibitoren Butindiol und Benztriazol und Alkindiolalkoxylate wie Butindiolethoxylat, Butindiolpropoxylat, Propargylalkoholethoxylat und Propargylalkoholpropoxylat eingesetzt.

Die Korrosionsinhibitoren werden - falls sie überhaupt in den Zusammensetzungen eingesetzt werden - in einer Menge von im allgemeinen 0,01 bis 50 g/l, bevorzugt 0,1 bis 20 g/l, besonders bevorzugt 1 bis 10 g/l eingesetzt.

### Komponente H

Neben oder gegebenenfalls anstelle der genannten Komponenten können des weiteren Verbindungen des Ce, Ni, Co, V, Fe, Zn, Zr, Ca, Mn, Mo, W, Cr und/oder Bi eingesetzt werden. Im allgemeinen führt der erfindungsgemäße Einsatz der Komponente A in den Zusammensetzungen zu so guten Korrosionsschutzeigenschaften, dass der Zusatz der genannten Verbindungen nicht erforderlich ist, d. h. in einer Ausführungsform der Erfindung sind die Zusammensetzungen frei von Verbindungen gemäß Komponente H. Bevorzugt sind die erfindungsgemäßen Zusammensetzungen Cr(VI)-frei. Falls die genannten Verbindungen (Komponente H) dennoch eingesetzt werden, werden bevorzugt Verbindungen ausgewählt aus Fe, Zn, Zr und Ca eingesetzt. Die Menge dieser Verbindungen in den erfindungsgemäßen Zusammensetzungen beträgt - falls diese Verbindungen überhaupt vorliegen - im allgemeinen 0,01 bis 100 g/l, bevorzugt 0,1 bis 50 g/l, besonders bevorzugt 1 bis 20 g/l.

### Komponente I

Neben einer oder mehreren der aufgeführten Komponenten E bis H können die erfindungsgemäßen Zusammensetzungen weitere Hilfs- und Zusatzstoffe enthalten. Geeignete Hilfs- und Zusatzstoffe sind unter anderem Leitfähigkeitspigmente oder leitfähige Füllstoffe z.B. Eisenphosphid, Vanadiumcarbid, Titannitrid, Ruß, Graphit, Molybdändisulfid oder mit Zinn oder Antimon dotiertes Bariumsulfat, wobei Eisenphosphid bevorzugt ist. Solche Leitfähigkeitspigmente oder leitfähige Füllstoffe werden den erfindungsgemäßen Zusammensetzungen zur Verbesserung der Schweißbarkeit der zu behandelnden Metalloberflächen oder zur Verbesserung einer nachfolgenden Beschichtung mit Elektrotauchlacken zugesetzt. Des weiteren können Kieselsäure-Suspensionen - insbesondere bei einer Verwendung der Zusammensetzungen zur Behandlung von Aluminium enthaltenden Oberflächen - eingesetzt werden.

Diese Hilfs- bzw. Zusatzstoffe liegen im allgemeinen in fein verteilter Form vor, d.h. ihre mittleren Teilchendurchmesser betragen im allgemeinen 0,005 bis 5 µm, bevorzugt 0,05 bis 2,5 µm. Die Menge der Hilfs- und Zusatzstoffe beträgt im allgemeinen 0,1 bis 50 bevorzugt 2 bis 35 Gew.-%, bezogen auf die Gesamtmasse der erfindungsgemäßen Zusammensetzungen.

### Komponente J

Die erfindungsgemäßen Zusammensetzungen können gegebenenfalls zusätzlich einen Komplexbildner enthalten. Geeignete Komplexbildner sind z.B. Ethylendiamintetraessigsäure (EDTA), Ethylendiamin (ED), Zitronensäure sowie Salze der genannten Verbindungen.

Die Menge der als Komplexbildner eingesetzten Verbindungen ist abhängig von der Salzfracht in den erfindungsgemäßen Zusammensetzungen und für den Fachmann problemlos durch z.B. Titration zu ermitteln.

### Komponente K

Neben den genannten Komponenten können die erfindungsgemäßen Zusammensetzungen weitere Additive enthalten. Geeignete Additive sind 1-(2-Vinylpyridinium)-2-ethylsulfobetain, 1,1-Dimethyl-2-propinyl-1-amin, 1-Pyridinium-2-ethylsulfobetain, 1-Pyridinium-2-hydroxy-3-propylsulfobetain, 1-Pyridinium-3-propylsulfobetain, 2,2'-Dichlordiethylether, 2,5-Dimethyl-3-hexin-2,5-diol, 2-Butin-1,4-diol, 2-Butin-1,4-diolethoxylat, 2-Butin-1,4-diolpropoxylat, 3-(2-Benzothiazolylthio)-1-propansulfonsäure-Na-Salz, 3,3'-Dithio-bis-(1-propansulfonsäure)-Na-Salz, 3[(Aminoiminomethyl]-thiol]-1-propansulfonsäure, 3-[(Dimethylamino)-thioxomethylthio]-1-propansulfonsäure-Na-Salz, 3-[Ethoxy-thioxomethylthio]-1-propansulfonsäure-K-Salz, 3-Chlor-2-hydroxy-1-propansulfonsäure-Na-Salz, 3-Hexin-2,5-diol, 3-Mercapto-1-propansulfonsäure-Na-Salz, 4,4'-Dihydroxydiphenylsulfon, 4-Methoxybenzaldehyd, Aldehyde, Alkylphenylpolyethylenoxidsulfopropylether-K-Salze, Alkylpolyethylenoxidsulfoproylether-K-Salze wie beispielsweise Tridecyl/Pentadecylpolyethylenoxidsulfoproylether-K-Salz, Allylsulfonsäure-Na-salz, Amidosulfonsäure, Amin- und Natrium- neutralisierte Phosphorsäureester von Alkylalkoholen, Amincarboxylate, Amino- und Nitrophenole, Aminoalkohole, Aminobenzimidazol, Aminoimidazoline, Aminotriazol, Benzylacetessigsäuremethylester, Benzylaceton, Benzimidazolamine, Benzothiazole, Benztriazol und seine Derivate, Benzylpyridin-3-carboxylat, Bisphenol A, Borsäureester mit verschiedenen Alkanolaminen wie beispielsweise Borsäurediethanolaminester, Carbonsäuren und ihre Ester, Carboxyethylisothiuroniumbetain, Chinolinderivate, Copolymere aus Ethylen und Acrylsäure, Copolymere aus Imidazol und Epichlorhydrin, Copolymere aus Imidazol, Morpholin und Epichlorhydrin, Copolymere aus N,N'-bis-[3-(dimethylamino)propyl]-harnstoff und 1,1'-Oxybis-[2-chlorethan], Copolymere aus n-Butylacrylat, Acrylsäure und Styrol, Dibenzylsulfoxid, Dicarbonsäuren und ihre Ester, Diethylentriaminpentaessigsäure und davon abgeleitete Salze, Diisobutenylbernsteinsäure, Dinatriumethylenbisdithiocarbamat, Dithiophosphonsäure, Ethylamidosulfonsäure, Ethylendiamintetraessigsäure und davon abgeleitete Salze, Ethylglycindiessigsäure und davon abgeleitete Salze, Ethylhexanolethoxylat, Fettamine und Fettsäureamide, Formaldehyd, Glycerinethoxylat, Guanidinderivate, Harnstoff und seine Derivate, Hydroxyethyliminodiessigsäure und davon abgeleitete Salze, Imidazol, Isopropylamidosulfonsäure, Isopropylamidosulfonylchlorid, Lauryl/Myristyltrimethylammonium-Methosulfat, Laurylpyridiniumchlorid, Maleinsäureamide, Mercaptobenzimidazol, Methylamidosulfonsäure, N,N,N',N'-Tetrakis(2-hydroxypropyl)-ethylendiamin, N,N-Diethyl-2-propin-1-amin, N,N-Diethyl-4-amino-2-butin-1-ol, N,N-Dimethyl-2-propin-1-amin, N-2-Ethylhexyl-3-aminosulfopropionsäure, N-Allylpyridiniumchlorid, Na-Salz sulfatierter Alkylphenolethoxylate, Natrium-2-ethylhexylsulfat, Nicotinsäure, Nitrilotriessigsäure und davon abgeleitete Salze, Nitrobenzolsulfonsäure-Na-Salz, N-Methallylpyridiniumchlorid, ortho-Chlorbenzaldehyd, Phosphoniumsalze, Phthalsäureamide, Picolinsäure, Polyetheramine, Polyethylenimine, Polyvinylimidazol, Propargylalkohol, Propargylalkoholethoxylat, Propargylalkoholpropoxylat, Propinsulfonsäure-Na-salz, Propiolsäure, Propylendiamintetraessigsäure und davon abgeleitete Salze, Pyrrol, Quaterniertes Polyvinylimidazol, Reaktionsprodukt aus 2-Butin-1,4-diol und Epichlorhydrin.

Die erfindungsgemäßen Zusammensetzungen können weiterhin Additive zur Verbesserung des Umformverhaltens enthalten, beispielsweise wachsbasierte Derivate auf Basis von natürlichen oder synthetischen Wachsen, z.B. Wachse basierend auf Acrylsäure, Polyethylen-, Polytetrafluorethylen (PTFE)-Wachse oder Wachsderivate oder Paraffine und ihre Oxidationsprodukte.

In Abhängigkeit von ihrem Anwendungsbereich können die erfindungsgemäßen Zusammensetzungen Polymerdispersionen basierend auf Styrol, 4-Hydroxystyrol, Butadien, Acrylsäure, Acrylsäureestern, Acrylsäureamiden, Acrylaten, Methacrylsäure, Methacrylsäureestern, Methacrylsäureamiden, Methacrylaten und Derivaten des Acrylamids enthalten. Weiterhin ist es möglich, dass die erfindungsgemäßen Zusammensetzungen Polyurethandispersionen und Polyesterurethandispersionen oder Polyharnstoffdispersionen enthalten.

Eine weitere Gruppe von Verbindungen, die in den erfindungsgemäßen Zusammensetzungen vorliegen können sind Polyethylenglycole, Polypropylenglycole, Copolymerisate des Ethylenoxids und des Propylenoxids untereinander und mit weiteren Alkoxylaten, wie Butenoxid.

Die erfindungsgemäßen Zusammensetzungen enthaltend die Komponente A können in allen Anwendungen zur Passivierung von Metalloberflächen eingesetzt werden. Solche Anwendungen sind die Ausbildung einer Passivierungsschicht (Konversionsschichtbildung), insbesondere No-Rinse-Konversionsschichtbildung, also Verfahren mit verringerter Anzahl von Spüloperationen, beispielsweise auf verzinktem Stahl und Aluminium. Dabei entspricht die Art der Applikation technisch üblichen Methoden mit der Ergänzung, dass die erfindungsgemäßen Zusammensetzungen gemeinsam mit für die entsprechende Anwendung technisch üblichen weiteren Komponenten eingesetzt werden oder dass sie in zusätzlichen Behandlungsschritten mit dem Metall in Kontakt gebracht werden, wie beispielsweise Sprühen, Walzen, Tauchen, Lackieren oder Elektrotauchlackieren unter Verwendung geeigneter Formulierungen der erfindungsgemäßen Zusammensetzungen wie Lösungen, Emulsionen, Dispersionen, Suspensionen oder Aerosole.

Ein weiterer Gegenstand der vorliegenden Anmeldung ist eine Passivierungsschicht auf einer Metalloberfläche, bevorzugt Al, Al-Legierungen, Zn, Zn-Legierungen, erhältlich durch in Kontakt bringen der Metalloberfläche mit der erfindungsgemäßen Zusammensetzung.
Bevorzugte Ausführungsformen der erfindungsgemäßen Zusammensetzung sowie der in der Zusammensetzung enthaltenen Komponenten und bevorzugte Ausführungsformen der Metalloberfläche sind bereits vorstehend genannt.

Die erfindungsgemäße Passivierungsschicht genügt den folgenden Anforderungen:
- sie ist - für viele Anwendungen auch ohne nachfolgende Lackierung - korrosionsinhibierend;
- sie verbessert die Lackhaftung, das heißt sie ist nicht hydrophobierend, was dadurch erreicht wird, dass die in den erfindungsgemäßen Zusammensetzungen als Komponente A eingesetzten Copolymere vollständig hydrophil sind;
- sie ist dünn, so dass die Maßhaltigkeit der passivierten Werkstücke gewährleistet ist;
- auch bei erhöhter Temperatur von etwa 120°C wirkt die erfindungsgemäße Passivierungsschicht noch korrosionsinhibierend;
- sie ist gegenüber dem Grundmetall (Metalloberfläche) farbneutral, ist jedoch mit dem Auge erkennbar, so dass die Detektion von Defekten erleichtert ist und eine einfache Unterscheidung von passivierten und nicht passivierten Teilen getroffen werden kann;
- sie ist ohne komplizierte Verfahrensschritte erhältlich.

Ein besonderes Merkmal der erfindungsgemäßen Passivierungsschicht ist, dass sie bereits in Form einer sehr dünnen Schicht eine hervorragende korrosionsinhibierende Wirkung aufweist.

Die Schichtdicke der erfindungsgemäßen auf der Metalloberfläche gebildeten Passivierungsschicht beträgt bevorzugt ≤3µm. Besonders bevorzugt beträgt die Schichtdicke 0,01 bis 3 µm, ganz besonders bevorzugt 0,1 bis 3 µm. Die Dicke der Schicht wird dabei durch Differenzwägung vor und nach Einwirkung der erfindungsgemäß eingesetzten Zusammensetzung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist. Diese dünnen Schichten genügen, um einen hervorragenden Korrosionsschutz zu erzielen. Durch solche dünnen Schichten ist die Maßhaltigkeit der passivierten Werkstücke gewährleistet.

In einer ganz besonders bevorzugten Ausführungsform enthält die erfindungsgemäße Passivierungsschicht außer den Metallen des Grundmetalls, insbesondere Aluminium und Zink bzw. Legierungsmetallen mit Aluminium oder Zink, keine weiteren Metalle, das bedeutet, dass die zur Herstellung der Passivierungsschicht eingesetzten Zusammensetzungen keine Metalle oder Metallverbindungen enthalten. Bereits ohne den Zusatz weiterer Metalle oder Metallverbindungen werden bei Einsatz der erfindungsgemäßen Zusammensetzungen enthaltend Copolymere gemäß Komponente A Passivierungsschichten erhalten, die eine hervorragende Korrosionsstabilität aufweisen.

Ein weiterer Gegenstand der vorliegenden Anmeldung ist eine Oberfläche aufgebaut aus einer Metalloberfläche und der erfindungsgemäßen Passivierungsschicht. Geeignete und bevorzugt eingesetzte Metalloberflächen sowie Passivierungsschichten sind bereits vorstehend erwähnt.

Ein weiterer Gegenstand der vorliegenden Anmeldung ist ein Verfahren zur Ausbildung der erfindungsgemäßen Passivierungsschicht auf einer Metalloberfläche, wobei die Metalloberfläche mit der erfindungsgemäßen Zusammensetzung in Kontakt gebracht wird. Geeignete Zusammensetzungen sowie bevorzugte Ausführungsformen geeigneter Zusammensetzungen sind bereits vorstehend erwähnt. Geeignete Metalloberflächen sowie bevorzugte Ausführungsformen der Metalloberflächen sind ebenfalls bereits vorstehend erwähnt.

Das erfindungsgemäß eingesetzte Copolymer (Komponente A) kann in den in dem erfindungsgemäßen Verfahren eingesetzten Zusammensetzungen in Lösung, Emulsion, Suspension oder als Aerosol vorliegen. Bevorzugt liegt das Copolymer (Komponente A) in den erfindungsgemäßen Zusammensetzungen in wässriger Lösung vor.

Die Art der Applikation entspricht technisch üblichen Methoden. Bevorzugt erfolgt das in Kontakt Bringen der Metalloberfläche mit erfindungsgemäßen Zusammensetzungen durch Aufsprühen der Zusammensetzung auf die Metalloberfläche oder Tauchen der Metalloberfläche in die Zusammensetzung. Die jeweils besonders bevorzugt angewendete Applikationsmethode ist abhängig von der Zahl, Größe und Form der zu behandelnden Teile. Demgemäß erfolgt das In Kontakt Bringen bevorzugt mittels eines Sprüh-, Walz-oder Tauchverfahrens.

Wird die erfindungsgemäße Passivierungsschicht durch Phosphatierung auf Metallbänder aufgebracht, so können Zusammensetzungen gemäß der vorliegenden Anmeldung enthaltend Phosphorsäure als Komponente F durch ein "Roll-on"- oder "-Dry-place"- oder "No-rinse"-Verfahren aufgebracht werden, wobei die erfindungsgemäß festgesetzte Phosphatierzusammensetzung auf das Metallband aufgebracht wird und ohne Spülung getrocknet wird, wobei sich ein Polymerfilm ausbildet.

Ein weiterer Gegenstand der vorliegenden Anmeldung ist ein Verfahren umfassend die Schritte:
a) gegebenenfalls Reinigung der Oberfläche des Grundmetalls zur Entfernung von Ölen, Fetten und Schmutz,
b) gegebenenfalls Waschen mit Wasser,
c) gegebenenfalls Pickling, um Rost oder andere Oxide zu entfernen,
d) gegebenenfalls Waschen mit Wasser,
e) In Kontakt Bringen der Metalloberfläche mit einer Zusammensetzung, die ein Copolymer (Komponente A) enthält, aufgebaut aus
   ea) 50 bis 99,9 Gew.-% (Meth)acrylsäure oder deren Salzen als Komponente Aa
   eb) 0,1 bis 50 Gew.-% eines Carboxylat-haltigen Monomeren der Formel I 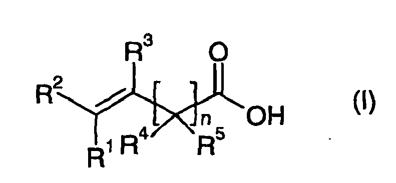 worin die Symbole die folgenden Bedeutungen haben:
      - n R¹, R², R³: 0 bis 10, bevorzugt 0 bis 5, besonders bevorzugt 0 bis 3; unabhängig voneinander Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆₋Cycloalkenyl, C₆- bis C₁₂-Aryl, das mit Alkyl- oder weiteren Arylsubstituenten substituiert sein kann, wobei die genannten Reste R¹, R² und/oder R³ gegebenenfalls mit mindestens einer Carboxylgruppe substituiert sein können, oder eine Carboxylgruppe; bevorzugt sind R¹, R² und R³ Wasserstoff oder C₁- bis C₁₈-Alkyl, das unverzweigt ist, und gegebenenfalls mit mindestens einer Carboxylgruppe substituiert ist, oder eine Carboxylgruppe; besonders bevorzugt ist einer der Reste R¹ oder R² oder R³ eine Carboxylgruppe und die übrigen Reste sind Wasserstoff oder Methyl; oder R¹, R² und R³ sind Wasserstoff oder Methyl;
      - R⁴ und R⁵: sind unabhängig voneinander, Wasserstoff, C₁- bis C₁₈-Alkyl, das verzweigt oder unverzweigt sein kann, C₃- bis C₆-Cycloalkyl, C₂- bis C₁₈-Alkenyl, das verzweigt oder unverzweigt sein kann, C₃- bis C₆₋Cycloalkenyl, C₆- bis C₁₂-Aryl, das mit Alkyl- oder weiteren Arylsubstituenten substituiert sein kann, bevorzugt sind R⁴ und R⁵, Wasserstoff oder C₁- bis C₁₈-Alkyl, das unverzweigt ist; ganz besonders bevorzugt Wasserstoff oder Methyl;
      oder Salzen, Anhydriden, Estern von Verbindungen der Formel I, ganz besonders bevorzugt sind Maleinsäure, Fumarsäure, Itaconsäure, Crotonsäure oder deren Salze, Ester, Anhydride, wobei (Meth)acrylsäure oder deren Salze ausgenommen sind, als Komponente Ab1,
      und
      gegebenenfalls 0,1 bis 50 Gew,-% Phosphor- und/oder Phosphonsäure oder deren Salze enthaltende Gruppen aufweisende Monomere, die mit den unter ea) und ec) genannten Monomeren sowie der Komponente Ab1 polymerisierbar sind, als Komponente Ab2,
   ec) 0 bis 30 Gew.-% weiteren Comonomeren, die mit den unter ea) und eb) genannten Monomeren polymerisierbar sind, als Komponente Ac;
f) gegebenenfalls Waschen mit Wasser,
g) gegebenenfalls Nachbehandlung.

Das In Kontakt Bringen der Metalloberfläche mit dem Copolymer (Komponente A) ist dabei der Passivierungsschritt, insbesondere ein Phosphatierungsschritt, der nach dem Fachmann bekannten Verfahren erfolgt. Dabei entsteht auf dem Metall die erfindungsgemäße Passivierungsschicht. Wird in Schritt e) eine Phosphatierung durchgeführt, ist eine Nachbehandlung der Metalloberfläche in g) mit passivierenden Zusätzen möglich. Bevorzugt erfolgt in Schritt e) ein in Kontakt Bringen mit der erfindungsgemäßen Zusammensetzung.

Bevorzugt eingesetzte Copolymere (Komponente A) und bevorzugt eingesetzte Zusammensetzungen wurden bereits vorstehend benannt.

Ein Waschen mit Wasser erfolgt zwischen den einzelnen Verfahrensschritten, um eine Verunreinigung der für den jeweils folgenden. Schritt erforderlichen Lösung mit. Komponenten der in dem vorhergegangenen Schritt eingesetzten Lösung zu vermeiden. Es ist jedoch auch denkbar, erfindungsgemäße Verfahren als "No-Rinse-Verfahren." durchzufüluen, d.h. ohne die Stufen b), d) und f).

In dem so genannten "No-Rinse"-Verfahren wird die erfindungsgemäß eingesetzte Zusammensetzung im Allgemeinen entweder auf die Oberfläche des Grundmetalls aufgesprüht oder durch Auftragssalzen auf die Oberfläche übertragen. Danach erfolgt nach einer Einwirkdauer, die im Allgemeinen im Bereich von 2 bis 20 Sekunden liegt, ohne weitere Zwischenspülung ein Eintrocknen der erfindungsgemäß eingesetzten Zusammensetzung. Dies kann zum Beispiel in einem beheizten Ofen erfolgen.

Die Schritte des Reinigens (Schritt a)) und des In Kontakt Bringens der Metalloberfläche in Anwesenheit des erfindungsgemäß eingesetzten Copolymers (Komponente A) bzw. der erfindungsgemäßen Zusammensetzung (Schritt e)) können auch in einem Schritt durchgeführt werden, d.h. mit einer Formulierung, die neben den üblichen Reinigungsmitteln auch das erfindungsgemäß eingesetzte Copolymer enthält.

Das erfindungsgemäße Verfahren erfolgt im Allgemeinen bei einer Temperatur von 5 bis 100 °C, bevorzugt von 10 bis 80°C, besonders bevorzugt 15 bis 45 °C.

Ein weiterer Gegenstand der vorliegenden Anmeldung ist die Verwendung einer Zusammensetzung enthaltend
a) mindestens ein Polymer als Komponente A aufgebaut aus
   aa) 50 bis 99,9 Gew.-% (Meth)acrylsäure oder deren Salzen als Komponente Aa
   ab1) 0,1 bis 30 Gew.-% eines Carboxylat-haltigen Monomeren der Formel I 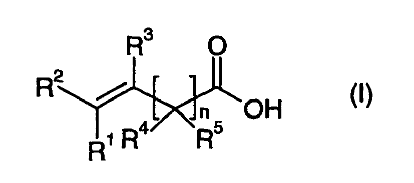 worin die Symbole die folgenden Bedeutungen haben:
      - n: 0 bis 10, bevorzugt 0 bis 5, besonders bevorzugt 0 bis 3;
      - R¹, R², R³: unabhängig voneinander Wasserstoff, C₁- bis C₁₈-Alkyl, das verzweigt oder unverzweigt sein kann, C₃- bis C₆₋Cycloalkyl, C₂- bis C₁₈-Alkenyl, das verzweigt oder unverzweigt sein kann, C₃- bis C₆-Cycloalkenyl, C₆- bis C₁₂₋Aryl, das mit Alkyl- oder weiteren Arylsubstituenten substituiert sein kann, wobei die genannten Reste R¹, R² und/oder R³ gegebenenfalls mit mindestens einer Carboxylgruppe substituiert sein können, oder eine Carboxylgruppe; bevorzugt sind R¹, R²und R³ Wasserstoff oder C₁- bis C₁₈-Alkyl, das unverzweigt ist, und gegebenenfalls mit mindestens einer Carboxylgruppe substituiert ist, oder eine Carboxylgruppe; besonders bevorzugt ist einer der Reste R¹ oder R² oder R³ eine Carboxylgruppe und die übrigen Reste sind Wasserstoff oder Methyl; oder R¹, R² und R³ sind Wasserstoff oder Methyl;
      - R⁴ und R⁵: sind unabhängig voneinander, Wasserstoff, C₁- bis C₁₈-Alkyl, das verzweigt oder unverzweigt sein kann, C₃- bis C₆₋Cycloalkyl, C₂- bis C₁₈-Alkenyl, das verzweigt oder unverzweigt sein kann, C₃- bis C₆-Cycloalkenyl, C₆- bis C₁₂₋Aryl, das mit Alkyl- oder weiteren Arylsubstituenten substituiert sein kann, bevorzugt sind R⁴ und R⁵, Wasserstoff oder C₁- bis C₁₈-Alkyl, das unverzweigt ist, ganz besonders bevorzugt Wasserstoff oder Methyl;
      oder Salzen, Anhydriden, Estern von Verbindungen der Formel I, ganz besonders bevorzugt sind Maleinsäure, Fumarsäure, Itaconsäure, Crotonsäure oder deren Salze, Ester, Anhydride, wobei (Meth)acrylsäure oder deren Salze ausgenommen sind, als Komponente Ab1,
      und
   ab2) gegebenenfalls 0,1 bis 50 Gew.-% Phosphor- und/oder Phosphonsäure oder deren Salze enthaltende Gruppen aufweisende Monomere, die mit den unter aa) und ac) genannten Monomeren sowie der Komponente Ab1 polymerisierbar sind, als Komponente Ab2,
   ac) 0 bis 30 Gew.-% weiteren Comonomeren, die mit den unter aa) und ab) genannten Monomeren polymerisierbar sind, als Komponente Ac;
a) Wasser oder ein anderes Lösungsmittel, das geeignet ist, das Polymer (Komponente A) zu lösen, zu dispergieren, zu suspendieren oder zu emulgieren, als Komponente B;
b) gegebenenfalls weitere oberflächenaktive Additive, Dispergiermittel, Suspendiermittel und/oder Emulgiermittel, als Komponente C;
zur Passivierung einer Metalloberfläche.

Bevorzugt eingesetzte Zusammensetzungen sowie in den Zusammensetzungen bevorzugt eingesetzte Copolymere (KomponenteA) sind bereits vorstehend genannt. Bevorzugt eingesetzte Metalloberflächen sowie bevorzugt durchgeführte Verfahren zur Passivierung der Metalloberfläche sind ebenfalls bereits vorstehend genannt.

Im Anschluss an das Verfahren zur Ausbildung einer Passivierungsschicht auf einer Metalloberfläche kann, in einer bevorzugten Ausführungsform des erfindungsgemäßen Verfahrens im Anschluss an die Verfahrensschritte a) bis g) die mit der erfindungsgemäßen Passivierungsschicht versehene Metalloberfläche mit einem Lack versehen werden. Die Lackierung erfolgt dabei nach dem Fachmann bekannten Verfahren.
Als Lack kann dabei zum Beispiel ein Pulverlack oder ein elektrolytisch, insbesondere kathodisch abschaltbarer Tauchlack eingesetzt werden.

Ein weiterer Gegenstand der vorliegenden Anmeldung ist somit ein Lackaufbau auf einer Oberfläche eines Grundmetalls umfassend mindestens eine erfindungsgemäße Passivierungsschicht X und mindestens eine Lackschicht, bevorzugt mehrere Lackschichten, als Schicht(en) Y.

Die Passivierungsschicht und bevorzugte Ausführungsformen der Passivierungsschicht sind bereits vorstehend genannt. Geeignete Lackschichten sind dem Fachmann bekannt.

Der erfindungsgemäße Lackaufbau kann eine Mehrschichtlackierung (mehrere Lackschichten) mit weiteren Schichten enthalten. Beispielsweise kann eine Mehrschichtlackierung aus mindestens einer der folgenden Schichten aufgebaut sein, die typischerweise folgendermaßen angeordnet sein können:
- eine pigmentierte und/oder mit Effektstoffen versehene Schicht W,
- eine Schicht Z, ausgewählt aus der Gruppe Primer, Basislack, Grundierung, pigmentierter Lack oder mit Effektstoffen versehener Lack.

Als farb- und/oder effektgebende Lacke in der Schicht Z und/oder W kommen im Grunde alle für diese Zwecke üblichen und dem Fachmann bekannten Lacke in Betracht. Diese können physikalisch, thermisch, mit aktinischer Strahlung oder thermisch und mit aktinischer Strahlung (dual-cure) härtbar sein. Es kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (pigmentierte Pulverlacke) oder im wesentlichen lösemittelfreie pigmentierte Pulverlackdispersionen (Pulverslurry-Basislacke) handeln. Sie können thermisch oder DualCure-härtbar sein, und selbst- oder fremdvernetzend.

Es können einer oder mehrere, bevorzugt 1 bis 3, besonders bevorzugt 1 bis 2 und ganz besonders bevorzugt ein farb- und/oder effektgebender Lack in den Schichten eingesetzt werden.

Im Wesentlichen lösemittelfrei bedeutet, dass der betreffende Beschichtungsstoff einen Restgehalt an flüchtigen Lösemitteln von < 2,0 Gew.-%, bevorzugt < 1,5 Gew.-% und besonders bevorzugt < 1,0 Gew.-% hat. Es ist von ganz besonderem Vorteil, wenn der Restgehalt unterhalb der gaschromatographischen Nachweisgrenze liegt.

Besonders bevorzugt werden in den Mehrschichtlackierungen Wasserbasislacke angewandt, wie sie aus den Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590 484 A1, EP 0 234 362 A1, EP 0 234 361 A1, EP 0 543 817 A1, W095/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1 oder EP 0 817 684, Spalte 5, Zeilen 31 bis 45, bekannt sind.

Die vorstehend beschriebenen farb- und/oder effektgebenden Lacke können nicht nur der Herstellung von farb- und/oder effektgebenden Basislackierungen, sondern auch von farb-und/oder effektgebenden Kombinationseffektschichten dienen. Hierunter ist eine Lackierung zu verstehen, die in einer farb- und/oder effektgebenden Mehrschichtlackierung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vor allem dient die Kombinationseffektschicht der Absorption mechanischer Energie sowie der Farb- und/ oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Typische Dicken der Schicht (W) und/oder (Z) reichen von 0,1 bis 2000 µm, bevorzugt 0,5 bis 1000 µm, besonders bevorzugt von 1 bis 500 µm, ganz besonders bevorzugt von 1 bis 250 µm und insbesondere von 10 bis 100 µm. Die in den Mehrschichtlackierungen einsetzbaren Lacke können farb- und/oder effektgebende Pigmente enthalten. Als farbgebende Pigmente sind alle lacküblichen Pigmente organischer oder anorganischer Natur geeignet. Beispiele für anorganische oder organische Farbpigmente sind Titandioxid, mikronisiertes Titandioxid, Eisenoxidpigmente, Ruß, Azopigmente, Phthalocyaninpigmente, Chinacridon- und Pyrrolopyrrolpigmente.

Die Effektpigmente zeichnen sich insbesondere durch einen plättchenartigen Aufbau aus. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente. Vorteilhaft können, beispielsweise zur Verbesserung der Härte, UV-härtbare Pigmente und gegebenenfalls auch Füllstoffe eingesetzt werden. Es handelt sich hierbei um mit strahlungshärtbaren Verbindungen, z.B. acrylfunktionellen Silanen, gecoatete Pigmente/Füllstoffe, die somit in den Strahlenhärteprozeß mit einbezogen werden können.

Der erfindungsgemäBe Lackaufbau wird im Allgemeinen durch ein Verfahren umfassend die Schritte:
a) Ausbildung einer Passivierungsschicht X gemäß einem vorstehend genannten Verfahren zur Ausbildung der Passivierungsschicht;
b) Lackieren der Passivierungsschicht,
hergestellt.

Ein Verfahren zur Ausbildung der Passivierungsschicht sowie bevorzugte Ausführungsformen dieses Verfahrens sind bereits vorstehend genannt. Als Schritt b) geeignete Lackierungsverfahren sind dem Fachmann bekannt.

Die nachfolgenden Beispiele erläutern die Erfindung zusätzlich.

### Beispiele

### Vergleichsbeispiele:

Prüfbleche (verzinkter Stahl, 20 µm Zink) wurden nach einer in Tabelle 1 genannten Passivierungsmethode passiviert. Die Standzeit wurde im Salzsprühtest bestimmt.

### Salzsprühtest

Als Maß der korrosionsinhibierenden Wirkung dient das Ergebnis eines Salzsprühtests nach DIN 50021. Je nachdem, welche Art von Korrosionsschaden beobachtet wird, wird die Standzeit im Korrosionstest unterschiedlich definiert.
- Bilden sich weiße Flecken von im Allgemeinen mehr als 1 mm Durchmesser (Zn-oder Al-Oxid, sogenannter Weißrost), so wird die Standzeit als die Zeit angegeben, nach der das Schadbild dem Bewertungsgrad 8 in DIN EN ISO 10289 vom April 2001, Anhang B, Seite 19, entspricht.
- Bilden sich schwarze Flecken von im Allgemeinen weniger als 1 mm Durchmesser (insbesondere auf mit einer Passivierungsschicht versehenen Zink), bevor sich Weißrostflecken bilden, so wird die Standzeit als die Zeit angegeben, nach der das Schadbild dem Bewertungsgrad 8 in DIN EN ISO 10289 vom April 2001, Anhang A, Seite 9, entspricht.

**Tabelle 1**

| | Passivierungsmethode | Standzeit |
|---|---|---|
| Vergleichsbeispiel | Passivierung in HNO₃, 0,1 % | < 1 h |
| Vergleichsbeispiel | Handelsübliche Cr(III) Dickschichtpassivierung (EP-A 0 907 762) | >> 10 h |

Die in Tabelle 2 genanten Reagenzien werden mit der Konzentration C in 0,1%iger HNO₃ gelöst. Prüfbleche (verzinkter Stahl, 20 µm Zink) werden für 1 Minute in die Lösung eingetaucht und durch Aufhängen über Nacht getrocknet. Die durch Differenzwägung ermittelten Schichtdicken betragen zwischen 1 und 3 µm. Die Standzeit wird im Salzsprühtest bestimmt.

### Differenzwägung

Die Dicke der Schicht wird durch Differenzwägung vor und nach Einwirken der erfindungsgemäß eingesetzten Zusammensetzung auf die Metalloberfläche und unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist.

**Tabelle 2**

| Beispiel | Reagenz | C [Gew.-%] | Standzeit [h] |
|---|---|---|---|
| 1 | Copolymer, hergestellt durch Polymerisation aus 25 Gew.-% Maleinsäure-anhydrid und 75 Gew.-% Acrylsäure und nachfolgende Reaktion mit Triethanolamin und Wasser in der Wärme (pH 3,5) | 1,5 | > 30 |
| 2 | Copolymere, hergestellt durch Polymerisation aus 22 Gew.-% Maleinsäure-anhydrid, 75 Gew.-% Acrylsäure und 3 Gew.-% Vinylphosphonsäure und Wasser bei 100 °C (K-Wert 14). | 1,5 | > 30 |
| 3 | Copolymer, hergestellt durch Polymerisation aus 22 Gew.-% Maleinsäure-anhydrid, 75 Gew.-% Acrylsäure und 3 Gew.-% Vinylphosphonsäure und Wasser bei 120 °C (K-Wert 31). | 1,5 | > 33 |
| Vergleichsbeispiel 1 | Acrylsäure/Methacrylsäure-Copolymer, umgesetzt mit je 1 mol 3-Dimethylamino-propylamin je Carboxylat-gruppe | 5 | < 1 |
| Vergleichsbeispiel 2 | Acrylsäure/Methacrylsäure-Copolymer, umgesetzt mit je 1 mol Diethylentriamin je Carboxylatgruppe | 5 | < 1 |
| Vergleichsbeispiel 3 | Acrylsäure/Methacrylsäure-Copolymer, umgesetzt mit je 1 mol Imidazol je Carboxylatgruppe | 5 | < 1 |
| Vergleichsbeispiel 4 | Polyvinylpyrrolidon K-Wert 30 (DE-A10005113) | 5 | < 1 |

| | | | |
|---|---|---|---|
| * Der K-Wert ist die Fikentscher-Konstante zur Kennzeichnung des mittleren Molekulargewichts, vgl. H.-G. Elias, Makromoleküle Bd. 1, 5. Auflage, Hüthig & Wepf Verlag, Basel 1990, Seite 99. | | | |

### Herstellungsvorschriften für die erfindungsgemäβ eingesetzten Copolymere

### Beispiel 1:

In einem 61 Druckreaktor der mit Ankerrührer, Temperaturkontrolle, Stickstoffeinleitung und 2 Zulaufstellen versehen ist, werden 486 g Maleinsäureanhydrid (4,96 Mol), 22,5 mg Eisensulfat, und 1000 g entionisiertes Wasser vorgelegt.

Unter Stickstoffatmosphäre wird auf 115 bis 120 °C erwärmt. Nach Erreichen dieser Temperatur wird innerhalb von 4 Stunden Zulauf 1, bestehend aus 1665 g Acrylsäure (23,1 Mol) und 1190 g entionisiertem Wasser, sowie innerhalb von 5 Stunden Zulauf 2, bestehend aus 115,0 g Wasserstoffperoxid (30 %ig) und 258 g entionisiertem Wasser gleichmäßig zudosiert. Nach Ende von Zulauf 1 werden weitere 190 g entionisiertes Wasser zugegeben. Die Reaktionsmischung wird weitere 2 Stunden bei 120 °C gerührt. Während der Polymerisation wird der Druck durch vorsichtiges Entspannen bei 3 bis 4 bar gehalten.

Nach dem Abkühlen erhält man eine gelbliche, klare Polymerlösung.

Zu der Polymerlösung werden zur Hydrolyse der Anhydrid-Gruppen 672 g Triethanolamin (entspricht 30 Gew.-%, bezogen auf Maleinsäure und Acrylsäure) so zugegeben, dass eine Innentemperatur im Reaktor von 40 °C nicht überschritten wird.

Man erhält eine gelbe, klare Polymerlösung mit einem Feststoffgehalt von 53 %.

### Beispiel 2:

In einem Mehrhalskolben der mit Rührer, Innenthermometer, Rückflusskühler und Stickstoffeinleitung versehen ist, werden 73 g Maleinsäureanhydrid (0,73 Mol), 3,375 mg Eisensulfat und 150 g entionisiertes Wasser vorgelegt. Der Reaktor wird unter Rühren mit Stickstoff inertisiert. Die Mischung wird unter Rühren auf 100 °C erhitzt. Dann werden gleichzeitig eine Mischung aus 259 g Acrylsäure (3,6 Mol), 10 g Vinylphosphonsäure (3 Gew.-% bezogen auf Maleinsäureanyhdrid und Acrylsäure) in 5 Stunden und 277 g Wasserstoffperoxid (30 %ig) in Wasser in 6 Stunden gleichmäßig zudosiert.

Die Reaktionsmischung wird weitere 2 Stunden bei 100 °C gehalten.

Nach dem Abkühlen erhält man eine gelbliche, klare Polymerlösung mit einem Feststoffgehalt von 45,3 %. Der K-Wert der Polymerlösung (1%ig in entionisiertem Wasser) beträgt 14.

### Beispiel 3:

In einem 61 Druckreaktor der mit Ankerrührer, Temperaturkontrolle, Stickstoffeinleitung und 2 Zulaufstellen versehen ist, werden 486 g Maleinsäureanhydrid (4,96 Mol), 22,5 mg Eisensulfat, und 1000 g entionisiertes Wasser vorgelegt.

Unter Stickstoffatmosphäre wird auf 115 bis 120 °C erwärmt. Nach Erreichen dieser Temperatur wird innerhalb von 4 Stunden Zulauf 1, bestehend aus 1665 g Acrylsäure (23,1 Mol) 66 g Vinylphosphonsäure (3 Gew.-% bezogen auf Maleinsäureanhydrid und Acrylsäure) und 1190 g entionisiertem Wasser, sowie innerhalb von 5 Stunden Zulauf 2, bestehend aus 115 g Wasserstoffperoxid (30 %ig) und 258 g entionisertem Wasser gleichmäßig zudosiert. Nach Ende von Zulauf 1 werden weitere 190 g entionisertes Wasser zugegeben. Die Reaktionsmischung wird weitere 2 Stunden bei 120 °C gerührt. Während der Polymerisation wird der Druck durch vorsichtiges Entspannen bei 3 bis 4 bar gehalten.

Nach dem Abkühlen erhält man eine gelbliche, klare Polymerlösung mit einem Feststoffgehalt von 45,6 %.

Der K-Wert der Polymerlösung (1 %ig in entionisiertem Wasser) beträgt 31.

Beim Vergleich von nicht behandelten mit behandelten (d.h. mit einer erfindungsgemäßen Passivierungsschicht versehenen Blechen) wird eine Verdreifachung der Standzeit im Korrosionstest als sicherer Hinweis auf korrosionsinhibierende Wirkung verstanden.

Durch Eintauchen bei höherer Temperatur (z.B. bei 60°C) oder in konzentriertere Lösungen, auch in Salpetersäure von veränderter Konzentration gegenüber den oben genannten Beispielen, kann die Standzeit im Korrosionstest noch weiter verbessert werden.

## Patentansprüche

1. Zusammensetzung zur Behandlung von Metalloberflächen enthaltend
a) mindestens ein Copolymer als Komponente A aufgebaut aus
aa) 50 bis 99,9 Gew.-% (Meth)acrylsäure oder deren Salzen, als Komponente Aa;
ab1) 0,1 bis 50 Gew.-% eines Carboxylat-haltigen Monomeren der Formel I 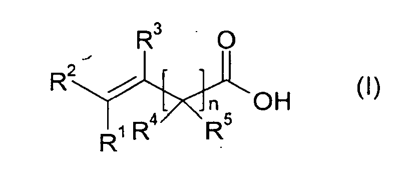 worin die Symbole die folgenden Bedeutungen haben:
n 0 bis 10,
R¹, R², R³ unabhängig voneinander Wasserstoff, C₁- bis C₁₈-Alkyl, das verzweigt oder unverzweigt sein kann, C₃₋bis C₆-Cycloalkyl, C₂- bis C₁₈-Alkenyl, das verzweigt oder unverzweigt sein kann, C₃- bis C₆-Cycloalkenyl, C₆- bis C₁₂-Aryl, das mit Alkyl- oder weiteren Arylsubstituenten substituiert sein kann, wobei die genannten Reste R¹, R² und/oder R³ gegebenenfalls mit mindestens einer Carboxylgruppe substituiert sein können, oder eine Carboxylgruppe;
R⁴ und R⁵ sind unabhängig voneinander, Wasserstoff, C₁- bis C₁₈-Alkyl das verzweigt oder unverzweigt sein kann., C₃- bis C₆-Cycloalkyl, C₂- bis C₁₈-Alkenyl, das verwzeigt oder unverzweigt sein kann, C₃- bis C₆₋Cycloalkenyl, C₆- bis C₁₂-Aryl, das mit Alky- oder weiteren Arylsubstituenten substituiert sein kann; oder Salzen, Anhydriden, Estern von Verbindungen der Formel I, wobei (Meth)acrylsäure ausgenommen ist, wobei (Meth)acrylsäure oder deren Salze ausgenommen sind, als Komponente Ab 1
und
ab2) gegebenenfalls 0,1 bis 50 Gew.-% Phosphor- und/oder Phosphonsäure oder deren Salze enthaltende Gruppen aufweisende Monomere als Komponente Ab2, die mit den unter aa) und ac) genannten Monomeren sowie der Komponente Ab1 polymerisierbar sind
ac) 0 bis 30 Gew.-% weiteren Comonomeren, die mit den unter aa) und ab) genannten Monomeren polymerisierbar sind, als Komponente Ac;
b) Wasser oder ein anderes Lösungsmittel, das geeignet ist, das Polymer (Komponente A) zu lösen, zu dispergieren, zu suspendieren oder zu emulgieren, als Komponente B;
c) gegebenenfalls weitere oberflächenaktive Additive, Dispergiermittel, Suspendiermittel und/oder Emulgiermittel als Komponente C.

2. Zusammensetzung nach Anspruch 1, **dadurch gekennzeichnet, dass** die Komponente Aa Acrylsäure oder ein Salz der Acrylsäure, die Komponente Ab1 Maleinsäureanhydrid und die Komponente Ab2 Vinylphosphonsäure oder Methacrylsäure(phosphonoxyethyl)ester ist.

3. Zusammensetzung nach Anspruch 1 oder 2, **dadurch gekennzeichnet, dass** als Komponente A ein Copolymer aufgebaut aus Acrylsäure und Maleinsäureanhydrid oder ein Terpolymer aufgebaut aus (Meth)acrylsäure, Maleinsäureanhydrid und Vinylphosphonsäure eingesetzt wird.

4. Zusammensetzung nach einem der Ansprüche 1 bis 3 enthaltend zusätzlich zu den Komponenten A, B und gegebenenfalls C
d) mindestens eine stickstoffhaltige Base, bevorzugt mindestens ein tertiäres alkalisches Amin, besonders bevorzugt mindestens ein Hydroxylamin, 3-Dimethylaminopropylamin und/oder Imidazol, als Komponente D.

5. Zusammensetzung nach einem der Ansprüche 1 bis 4 enthaltend zusätzlich zu den Komponenten A, B, gegebenenfalls C und gegebenenfalls D
e) mindestens ein Salz, eine Säure oder eine Base basierend auf Übergangsmetallkationen, Übergangsmetalloxoanionen, Fluorometallaten oder Lanthanoiden, als Komponente E,
und/oder
f) mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren, Ameisensäure, Essigsäure, Salpetersäure, Flusssäure und Salzsäure als Komponente F,
und/oder
g) mindestens einen weiteren Korrosionsinhibitor, als Komponente G,
und/oder
h) Verbindungen des Ce, Ni, Co, V, Fe, Zn, Zr, Ca, Mn, Mo, W, Cr und/oder Bi, als Komponente H,
und/oder
i) weitere Hilfs- und Zusatzstoffe, als Komponente I,
und/oder
j) mindestens einen Komplexbildner als Komponente J,
und/oder
k) weitere Additive, als Komponente K.

6. Passivierungsschicht auf einer Metalloberfläche erhältlich durch in Kontakt bringen der Metalloberfläche mit einer Zusammensetzung, die ein Copolymer gemäß einem der Ansprüche 1 bis 3 (Komponente A) enthält.

7. Passivierungsschicht nach Anspruch 6, **dadurch gekennzeichnet, dass** die Schichtdicke der Passivierungsschicht ≤ 3 µm beträgt.

8. Oberfläche aufgebaut aus einer Metalloberfläche und einer Passivierungsschicht nach Anspruch 6 oder 7..

9. Verfahren zur Ausbildung einer Passivierungsschicht auf einer Metalloberfläche, wobei die Metalloberfläche mit einer Zusammensetzung gemäß einem der Ansprüche 1 bis 5 in Kontakt gebracht wird.

10. Verfahren nach Anspruch 9, **dadurch gekennzeichnet, dass** das In Kontakt Bringen durch Sprüh-, Walz-, oder Tauchverfahren erfolgt.

11. Verwendung einer Zusammensetzung gemäß einem der Ansprüche 1 bis 5 zur Passivierung einer Metalloberfläche.

12. Lackaufbau auf einer Oberfläche umfassend eine Passivierungsschicht X nach Anspruch 6 oder 7 und weitere Lackschichten Y.

13. Verfahren zur Ausbildung eines Lackaufbaus nach Anspruch 12, umfassend die Schritte:
• Ausbildung einer Passivierungsschicht X gemäß einem Verfahren nach Anspruch 9 oder 10;
• Lackieren der Passivierungsschicht.

## Claims

1. A composition for treating metal surfaces, comprising
a) at least one copolymer as component A, synthesized from
aa) 50 to 99.9% by weight of (meth)acrylic acid or salts thereof as component Aa;
ab1) 0.1 to 50% by weight of a carboxylate-containing monomer of the formula I 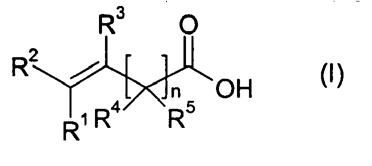 in which the symbols have the following definitions:
n is 0 to 10,
R¹, R², and R³ independently of one another are hydrogen, C₁ to C₁₈ alkyl, which may be branched or unbranched, C₃ to C₆ cycloalkyl, C₂ to C₁₈ alkenyl, which may be branched or unbranched, C₃ to C₆ cycloalkenyl, C₆ to C₁₂ aryl, which may be substituted by alkyl substituents or other aryl substituents, it being possible for the stated radicals R¹, R² and/or R³ optionally to be substituted by at least one carboxyl group, or are a carboxyl group;
R⁴ and R⁵ are independently of one another hydrogen, C₁ to C₁₈ alkyl, which may be branched or unbranched, C₃ to C₆ cycloalkyl, C₂ to C₁₈ alkenyl, which may be branched or unbranched, C₃ to C₆ cycloalkenyl, C₆ to C₁₂ aryl, which may be substituted by alkyl substituents or other aryl substituents; or salts, anhydrides, esters of compounds of the formula I, with the exception of (meth)acrylic acid, with the exception of (meth)acrylic acid or salts thereof, as component Ab1;
and
ab2) if appropriate, 0.1 to 50% by weight of monomers containing groups comprising phosphoric and/or phosphonic acid or salts thereof, as component Ab2, and polymerizable with the monomers specified under aa) and ac), and also with component Ab1;
ac) 0 to 30% by weight of further comonomers polymerizable with the monomers specified under aa) and ab), as component Ac;
b) water or another solvent capable of dissolving, dispersing, suspending or emulsifying the polymer (component A), as component B;
c) if appropriate, further surface-active additives, dispersants, suspension agents and/or emulsifiers as component C.

2. The composition according to claim 1, wherein component Aa is acrylic acid or a salt of acrylic acid, component Ab1 is maleic anhydride, and component Ab2 is vinylphosphonic acid or methacrylic acid phosphonoxyethyl ester.

3. The composition according to claim 1 or 2, wherein as component A a copolymer synthesized from acrylic acid and maleic anhydride or a terpolymer synthesized from (meth)acrylic acid, maleic anhydride, and vinylphosphonic acid is used.

4. The composition according to one of claims 1 to 3, comprising further to components A, B, and, if appropriate, C
ad) at least one nitrogen base, preferably at least one tertiary alkaline amine, more preferably at least one hydroxylamine, 3-dimethylaminopropylamine and/or imidazole, as component D.

5. The composition according to one of claims 1 to 4, comprising further to components A, B, if appropriate C, and, if appropriate, D
e) at least one salt, acid or base based on transition metal cations, transition metal oxo anions, fluorometallates or lanthanoids as component E,
and/or
f) at least one acid or one alkali metal or alkaline earth metal salt of said acid selected from the group consisting of phosphoric acid, sulfuric acid, sulfonic acids, formic acid, acetic acid, nitric acid, hydrofluoric acid, and hydrochloric acid, as component F,
and/or
g) at least one further corrosion inhibitor as component G,
and/or
h) compounds of Ce, Ni, Co, V, Fe, Zn, Zr, Ca, Mn, Mo, W, Cr and/or Bi as component H,
and/or
i) further auxiliaries and additives as component I,
and/or
j) at least one complexing agent as component J,
and/or
k) further additives as component K.

6. A passivating layer on a metal surface, obtainable by contacting the metal surface with a composition comprising a copolymer according to one of claims 1 to 3 (component A).

7. The passivating layer according to claim 6, whose thickness is < 3 µm.

8. A surface composed of a metal surface and a passivating layer according to claim 6 or 7.

9. A process for forming a passivating layer on a metal surface, wherein the metal surface is contacted with a composition according to one of claims 1 to 5.

10. The process according to claim 9, wherein said contacting is effected by spraying, rolling or dipping methods.

11. The use of a composition according to one of claims 1 to 5 to passivate a metal surface.

12. A coating system on a surface comprising a passivating layer X according to claims 6 or 7 and further coating films Y.

13. A process of forming a coating system according to claim 12, comprising the steps of:
• forming a passivating layer X by a process according to claim 9 or 10;
• coating the passivating layer.

## Revendications

1. Composition pour le traitement de surfaces métalliques, contenant
a) au moins un copolymère comme composant A, constitué
aa) de 50 à 99,9 % en poids d'acide (méth)acrylique ou de ses sels, comme composant Aa,
ab1) de 0,1 à 50 % en poids d'un monomère contenant du carboxylate de la formule I : 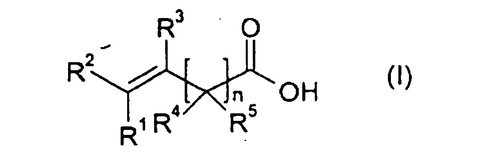 dans laquelle les symboles ont les significations suivantes :
n vaut 0 à 10,
R¹, R² R³ représentent indépendamment l'un de l'autre de l'hydrogène ou un groupe alkyle en C₁-C₁₈, qui peut être ramifié ou non ramifié cycloalkyle en C₃ -C₆ alcényle en C₂-C₁₈, qui peut être ramifié ou non ramifié, cycloalcényle en C₃-C₆, aryle en C₆-C₁₂, qui peut être substitué par des substituants alkyle ou d'autres substituants aryle, les radicaux cités R¹, R² et/ou R³ pouvant éventuellement être substitués par au moins un groupe carboxyle, ou un groupe carboxyle,
R⁴ et R⁵ représentent indépendamment l'un de l'autre de l'hydrogène ou un groupe alkyle en C₁-C₁₈, qui peut être ramifié ou non ramifié, cycloalkyle en C₃-C₆, alcényle en C₂-C₁₈, qui peut être ramifié ou non ramifié, cycloalcényle en C₃-C₆, aryle en C₆-C₁₂, qui peut être substitué par des substituants alkyle ou d'autres substituants aryle, ou des sels, anhydrides, esters de composés de la formule (I), l'acide (méth)acrylique étant exclu, l'acide (méth)acrylique ou ses sels étant exclus, comme composant Ab1,
et
ab2) éventuellement de 0,1 à 50 % en poids de monomères présentant des groupes contenant de l'acide phosphorique et/ou de l'acide phosphonique ou leurs sels, comme composant Ab2, qui sont polymérisables avec les monomères cités sous aa) et ac) ainsi qu'avec le composant Ab1,
ac) de 0 à 30 % en poids d'autres comonomères qui sont polymérisables avec les monomères cités sous aa) et ab), comme composant Ac,
b) de l'eau ou un autre solvant qui est approprié pour dissoudre, disperser, mettre en suspension ou émulsionner le polymère (composant A), comme composant B,
c) éventuellement d'autres additifs tensioactifs, dispersants, agents de suspension et/ou émulsionnants, comme composant C.

2. Composition suivant la revendication 1, **caractérisée en ce que** le composant Aa est de l'acide acrylique ou un sel de l'acide acrylique, le composant Ab1 de l'anhydride maléique et le composant Ab2 de l'acide vinylphosphonique ou du méthacrylate de phosphonoxyéthyle.

3. Composition suivant la revendication 1 ou 2, **caractérisée en ce que**, comme composant A, on met en oeuvre un copolymère constitué d'acide acrylique et d'anhydride maléique ou un terpolymère constitué d'acide (méth)acrylique, d'anhydride maléique et d'acide vinylphosphonique.

4. Composition suivant l'une des revendications 1 à 3, contenant en supplément aux composants A, B et éventuellement C
d) au moins une base contenant de l'azote, de préférence au moins une amine alcaline tertiaire, particulièrement avantageusement au moins une hydroxylamine, de la 3-diméthylaminopropylamine et/ou de l'imidazole, comme composant D.

5. Composition suivant l'une des revendications 1 à 4, contenant, en supplément aux composants A, B, et éventuellement C et éventuellement D,
e) au moins un sel, un acide ou une base à base de cations de métal de transition, d'oxoanions de métal de transition, de fluorométallates ou de lanthanoïdes, comme composant E,
et/ou
f) au moins un acide ou au moins un sel de métal alcalin ou alcalino-terreux de l'acide correspondant choisi parmi le groupe constitué d'acide phosphorique, d'acide sulfurique, d'acides sulfoniques, d'acide formique, d'acide acétique, d'acide nitrique, d'acide fluorhydrique et d'acide chlorhydrique, comme composant F,
et/ou
g) au moins un autre inhibiteur de corrosion, comme composant G,
et/ou
h) des composés de Ce, Ni, Co, V, Fe, Zn, Zr, Ca, Mn, Mo, W, Cr et/ou Bi, comme composant H,
et/ou
i) d'autres adjuvants et additifs, comme composant I,
et/ou
j) au moins un complexant, comme composant J, et/ou
k) d'autres additifs, comme Composant k.

6. Couche de passivation sur une surface métallique que l'on peut obtenir par mise en contact de la surface métallique avec une composition qui contient un copolymère suivant l'une des revendications 1 à 3 (composant A).

7. Couche de passivation suivant la revendication 6, **caractérisée en ce que** l'épaisseur de couche de la couche de passivation est ≤ 3 *µ*m.

8. Surface constituée d'une surface métallique et d'une couche de passivation suivant la revendication 6 ou 7.

9. Procédé de réalisation d'une couche de passivation sur une surface métallique, la surface métallique étant amenée en contact avec une composition suivant l'une des revendications 1 à 5.

10. Procédé suivant la revendication 9, **caractérisé en ce que** la mise en contact a lieu par un procédé de pulvérisation, de laminage ou d'immersion.

11. Utilisation d'une composition suivant l'une des revendications 1 à 5, pour la passivation d'une surface métallique.

12. Structure de vernis sur une surface, comprenant une couche de passivation X suivant la revendication 6 ou 7 et d'autres couches de vernis Y.

13. Procédé de réalisation d'une structure de vernis suivant la revendication 12, comprenant les étapes de :
- réalisation d'une couche de passivation X suivant un procédé selon la revendication 9 ou 10,
- vernissage de la couche de passivation.
